# EUROPEAN PATENT APPLICATION

(11) **EP 4 668 888 A1**
(43) Date of publication of application: **24.12.2025**
(21) Application number: 24755985.9
(22) Date of filing: 31.01.2024
(51) Int. Cl.: H04W 52/02, H04W 76/28

(54) **INFORMATION PROCESSING METHOD AND APPARATUS, AND READABLE STORAGE MEDIUM**

(30) Priority: 17.02.2023 CN 202310131369
(71) Applicant: Datang Mobile Communications Equipment Co., Ltd., Beijing 100085 (CN)
(72) Inventor: YANG, Meiying, Beijing 100085 (CN); WANG, Jiaqing, Beijing 100085 (CN); LUO, Chen, Beijing 100085 (CN); SU, Yuwan, Beijing 100085 (CN)
(74) Representative: Studio Torta S.p.A.
(86) International application number: PCT/CN2024/074815
(87) International publication number: WO 2024/169611

(57) **Abstract**

The present disclosure discloses an information processing method and device, and a readable storage medium, and relates to the technical field of communications. The method includes: obtaining a first occasion configuration parameter and/or first monitoring position of an energy-saving signaling, indicated by a network device; and in response to indication of the network device, monitoring or skipping the energy-saving signaling. The first occasion configuration parameter and/or the first monitoring position is used for determining to skip or monitor the energy-saving signaling, and the energy-saving signaling is used for indicating network energy-saving information.

## Description

### CROSS-REFERENCE TO RELATED APPLICATION

The present application is filed based on and claims the priority of Chinese Application No. 202310131369.5 filed on February 17, 2023, entitled "information processing method and device, and readable storage medium", the disclosure of which are incorporated in their entireties by reference herein.

### TECHNICAL FIELD

The present disclosure relates to the field of communication technologies, and in particular, to an information processing method and device, and readable storage medium.

### BACKGROUND

Energy consumption is a main indicator of operators' operating expenses (OPEX). Therefore, research on energy-saving technologies for energy consumption of the fifth-generation (5G) mobile communication network is urgent.

In the related art, network energy-saving solutions include time domain, frequency domain, spatial domain, power domain, and other energy-saving solutions. The energy-saving solutions in each domain require an energy-saving signaling for indication. Thus, further research and design are needed to determine how to design transmission occasions of the energy-saving signaling, so that a terminal can receive indication of the energy-saving signaling.

### SUMMARY

Embodiments of the present disclosure provide an information processing method and device, and readable storage medium, which can enable the UE to accurately monitor an energy-saving signaling.

In a first aspect, one embodiment of the present disclosure provides an information processing method, applied to a user equipment (UE), including:
obtaining a first occasion configuration parameter and/or a first monitoring position of an energy-saving signaling from an indication of a network device;
in response to the indication from the network device, monitoring or skipping the energy-saving signaling;
wherein the first occasion configuration parameter and/or the first monitoring position is used to determine whether to skip or monitor the energy-saving signaling, and the energy-saving signaling is used to indicate network energy-saving information.

Optionally, the network energy-saving information includes at least one of the following:
time domain energy-saving information;
frequency domain energy-saving information;
spatial domain energy-saving information;
power domain energy-saving information.

Optionally, the first occasion configuration parameter and/or the first monitoring position of the energy-saving signaling indicated by the network device are obtained in one or more of the following manners:
explicit manner;
explicit manner;
based on predefined rules.

Optionally, the obtaining a first occasion configuration parameter and/or a first monitoring position of an energy-saving signaling from an indication of a network device, includes:
obtaining the first occasion configuration parameter and/or the first monitoring position of the energy-saving signaling indicated by the network device through dynamic signaling.

Optionally, the obtaining the first occasion configuration parameter and/or the first monitoring position of the energy-saving signaling indicated by the network device through dynamic signaling, includes one or more of the following:
obtaining the first occasion configuration parameter and/or the first monitoring position of the energy-saving signaling explicitly indicated by the network device through dynamic signaling;
obtaining the first occasion configuration parameter and/or the first monitoring position of the energy-saving signaling implicitly indicated by the network device through dynamic signaling;
obtaining at least one value in a first parameter set indicated by the network device through dynamic signaling, wherein the first parameter set includes at least one set of second occasion configuration parameters or second monitoring positions of the energy-saving signaling, and the at least one value corresponds to at least one set of parameter sets in the first parameter set;
obtaining a first occasion configuration parameter and/or a first monitoring position of the energy-saving signaling at a second moment or within a first time range indicated by the network device through dynamic signaling at a first moment;
obtaining a processing manner for a preset number of first occasion configuration parameters and/or first monitoring positions of the energy-saving signaling indicated by the network device through dynamic signaling.

Optionally, the obtaining the first occasion configuration parameter and/or the first monitoring position of the energy-saving signaling explicitly indicated by the network device through dynamic signaling, includes:
obtaining the first occasion configuration parameter and/or the first monitoring position of the energy-saving signaling directly indicated by the network device through dynamic signaling;
determining at least one of a third timing parameter configuration or a third monitoring position of the energy-saving signaling activated or deactivated by the network device through dynamic signaling, wherein at least one of the third timing parameter configuration or the third monitoring position includes the first occasion configuration parameter and/or the first monitoring position;
determining the first occasion configuration parameter and/or the first monitoring location activated or deactivated by the network device through dynamic signaling.

Optionally, the method further includes:
receiving configuration information sent by the network device, wherein the configuration information is used to indicate an occasion configuration parameter or monitoring location of an energy-saving signaling associated with a network device energy-saving technology, or is used to indicate an occasion configuration parameter or monitoring location of an energy-saving signaling associated with relevant parameters of the network device energy-saving technology;
wherein the obtaining the first occasion configuration parameter and/or the first monitoring position of the energy-saving signaling implicitly indicated by the network device through dynamic signaling, includes:
obtaining information of a first network device energy-saving technology or relevant parameters of the first network device energy-saving technology indicated by the network device through dynamic signaling, wherein the first network energy-saving technology is one or more of the network device energy-saving technology;
determining the first occasion configuration parameter and/or the first monitoring position of the energy-saving signaling according to the configuration information, the information of the first network device energy-saving technology or the relevant parameters of the first network device energy-saving technology.

Optionally, the obtaining at least one value in a first parameter set indicated by the network device through dynamic signaling, includes:
obtaining at least one value in the first parameter set explicitly indicated by the network device through dynamic signaling; or
obtaining at least one value in the first parameter set implicitly indicated by the network device through dynamic signaling.

Optionally, the obtaining at least one value in the first parameter set explicitly indicated by the network device through dynamic signaling, includes:
obtaining the at least one value directly indicated by the network device through dynamic signaling; or
determining at least one value activated or deactivated by the network device through dynamic signaling.

Optionally, the method further includes:
receiving configuration information sent by the network device, wherein the configuration information is used to indicate at least one value in the first parameter set associated with a network device energy-saving technology, or is used to indicate at least one value in the first parameter set associated with relevant parameters of the network device energy-saving technology;
wherein the obtaining at least one value in the first parameter set implicitly indicated by the network device through dynamic signaling, includes:
obtaining information of a second network device energy-saving technology or relevant parameters of the second network device energy-saving technology indicated by the network device through dynamic signaling, wherein the second network energy-saving technology is one or more of the network device energy-saving technology;
determining the first occasion configuration parameter and/or the first monitoring position of the energy-saving signaling according to the configuration information, the information of the second network device energy-saving technology or the relevant parameters of the second network device energy-saving technology.

Optionally, the obtaining a first occasion configuration parameter and/or a first monitoring position of the energy-saving signaling at a second moment or within a first time range indicated by the network device through dynamic signaling at a first moment, includes:
determining a first occasion configuration parameter and/or a first monitoring position of an energy-saving signaling at a moment (n+k) activated or deactivated by dynamic signaling of the network device at a moment n; or
determining a first occasion configuration parameter and/or a first monitoring position of an energy-saving signaling within a time window from a moment n to a moment (n+k), activated or deactivated by dynamic signaling of the network device at a moment n;
wherein n and k are integers greater than or equal to 0.

Optionally, the obtaining a processing manner for a preset number of first occasion configuration parameters and/or first monitoring positions of the energy-saving signaling indicated by the network device through dynamic signaling, includes:
obtaining an instruction of skipping configuring or monitoring M first occasion configuration parameters and/or first monitoring positions, indicated by the network device through dynamic signaling; or
obtaining an instruction of configuring or monitoring L first occasion configuration parameters and/or first monitoring positions, indicated by the network device through dynamic signaling;
wherein M and L are integers greater than or equal to 0.

Optionally, the method further includes:
obtaining configuration information sent by the network device, wherein the configuration information includes at least one set of fourth timing parameter configurations or fourth monitoring positions of the energy-saving signaling.

Optionally, the configuration information sent by the network device is obtained in one or more of the following manners:
dynamic signaling;
radio resource control (RRC) signaling;
system message;
broadcast message;
high-level signaling;
core network signaling.

Optionally, the obtaining configuration information sent by the network device, includes:
obtaining first configuration information sent by the network device, wherein the first configuration information is used to configure at least one set of third timing parameter configurations or third monitoring positions of the energy-saving signaling;
obtaining second configuration information sent by the network device, wherein the second configuration information is used to configure at least one set of first parameter sets corresponding to the at least one set of third timing parameter configurations or the third monitoring positions;
wherein the configuration information includes the first configuration information and the second configuration information.

Optionally, the method further includes:
obtaining a network parameter sent by the network device, wherein the network parameter and the configuration information are used to determine a first occasion configuration parameter and/or a first monitoring position of the energy-saving signaling;
determining the first occasion configuration parameter and/or first monitoring position of the energy-saving signaling according to the network parameter and the configuration information.

Optionally, the method further includes:
performing an energy-saving operation according to the energy-saving signaling.

Optionally, the energy-saving signaling includes group-common physical layer downlink signaling.

In a second aspect, one embodiment of the present disclosure provides an information processing method applied to a network device, including:
indicating a first occasion configuration parameter and/or a first monitoring position of an energy-saving signaling to a user equipment (UE);
wherein the first occasion configuration parameter and/or the first monitoring position is used to determine whether to skip or monitor the energy-saving signaling, and the energy-saving signaling is used to indicate network energy-saving information.

Optionally, the network energy-saving information includes at least one of the following:
time domain energy-saving information;
frequency domain energy-saving information;
spatial domain energy-saving information;
power domain energy-saving information.

Optionally, the indicating a first occasion configuration parameter and/or a first monitoring position of an energy-saving signaling to a user equipment (UE), includes:
indicating the first occasion configuration parameter and/or the first monitoring position of the energy-saving signaling to the UE through dynamic signaling.

Optionally, the first occasion configuration parameter and/or the first monitoring position of the energy-saving signaling is indicated to the UE in one or more of the following manners:
explicit manner;
explicit manner;
based on predefined rules.

Optionally, the indicating the first occasion configuration parameter and/or the first monitoring position of the energy-saving signaling to the UE through dynamic signaling, includes:
explicitly indicating the first occasion configuration parameter and/or the first monitoring position of the energy-saving signaling through dynamic signaling;
implicitly indicating the first occasion configuration parameter and/or the first monitoring position of the energy-saving signaling through dynamic signaling;
indicating at least one value in a first parameter set through dynamic signaling, wherein the first parameter set includes at least one set of second occasion configuration parameters or second monitoring positions of the energy-saving signaling, and the at least one value corresponds to at least one set of parameter sets in the first parameter set;
indicating, at a first moment, through dynamic signaling, a first occasion configuration parameter and/or a first monitoring position of the energy-saving signaling at a second moment or within a first time range;
indicating a processing manner for a preset number of first occasion configuration parameters and/or first monitoring positions of the energy-saving signaling through dynamic signaling.

Optionally, the explicitly indicating the first occasion configuration parameter and/or the first monitoring position of the energy-saving signaling through dynamic signaling, includes:
directly indicating the first occasion configuration parameter and/or the first monitoring position of the energy-saving signaling through dynamic signaling;
activating or deactivating at least one of a third timing parameter configuration or a third monitoring position of the energy-saving signaling through dynamic signaling, wherein the at least one of the third timing parameter configuration or the third monitoring position includes the first occasion configuration parameter and/or the first monitoring position;
activating or deactivating the first occasion configuration parameter and/or the first monitoring location through dynamic signaling.

Optionally, the method further includes:
sending configuration information to the UE, wherein the configuration information is used to indicate an occasion configuration parameter or monitoring location of an energy-saving signaling associated with a network device energy-saving technology, or is used to indicate an occasion configuration parameter or monitoring location of an energy-saving signaling associated with relevant parameters of the network device energy-saving technology;
wherein the implicitly indicating the first occasion configuration parameter and/or the first monitoring position of the energy-saving signaling through dynamic signaling, includes:
according to the configuration information, indicating, through dynamic signaling, information of the first network device energy-saving technology or relevant parameters of the first network device energy-saving technology; wherein the first network energy-saving technology is one or more of network device energy-saving technologies.

Optionally, the indicating at least one value in a first parameter set through dynamic signaling, includes:
explicitly indicating at least one value in the first parameter set through dynamic signaling; or
implicitly indicating at least one value in the first parameter set through dynamic signaling.

Optionally, the explicitly indicating at least one value in the first parameter set through dynamic signaling, includes:
directly indicating the at least one value by dynamic signaling; or
activating or deactivating the at least one value by dynamic signaling.

Optionally, the method further includes:
sending configuration information to the UE, wherein the configuration information is used to indicate at least one value in the first parameter set associated with the network device energy-saving technology, or used to indicate at least one value in the first parameter set associated with a relevant parameter of the network device energy-saving technology;
wherein the implicitly indicating at least one value in the first parameter set through dynamic signaling, includes:
   according to the configuration information, indicating, through dynamic signaling, information of a second network device energy-saving technology or relevant parameters of the second network device energy-saving technology, wherein the second network energy-saving technology is one or more of network device energy-saving technologies.

Optionally, the configuration information is sent to the UE in one or more of the following ways:
dynamic signaling;
RRC signaling;
system messages;
broadcast messages;
high-level signaling;
core network signaling.

Optionally, the relevant parameter includes at least one of the following:
system load, resource occupancy rate, service UE ratio, activated UE ratio, and a parameter set of the base station energy-saving technology;
wherein the parameter set of the base station energy-saving technology includes at least one of the following:
   a type of the base station energy-saving technology, which includes at least one time domain energy-saving technology, at least one frequency domain energy-saving technology, and at least one spatial domain energy-saving technology;
   occasion configuration parameter or monitoring location time domain configuration;
   occasion configuration parameter or monitoring location frequency domain configuration,
   occasion configuration parameter or monitoring location spatial configuration.

Optionally, the indicating, at a first moment, through dynamic signaling, a first occasion configuration parameter and/or a first monitoring position of the energy-saving signaling at a second moment or within a first time range, includes:
activating or deactivating a first occasion configuration parameter and/or first monitoring position of the energy-saving signaling at a moment (n+k) through dynamic signaling at a moment n; or
activating or deactivating a first occasion configuration parameter and/or first monitoring position of the energy-saving signaling within a time window from a moment n to a moment (n+k) through dynamic signaling at a moment n;
wherein n and k are integers greater than or equal to 0.

Optionally, the indicating a processing manner for a preset number of first occasion configuration parameters and/or first monitoring positions of the energy-saving signaling through dynamic signaling, includes:
instructing, through dynamic signaling, to skip configuring or monitoring M first occasion configuration parameters and/or first monitoring positions; or,
instructing, through dynamic signaling, to configure or monitor L first occasion configuration parameters and/or first monitoring positions;
wherein M and L are integers greater than or equal to 0.

Optionally, the method further includes:
sending the configuration information to the UE, wherein the configuration information includes at least one set of fourth timing parameter configurations or fourth monitoring positions of the energy-saving signaling.

Optionally, the configuration information is sent to the UE in one or more of the following ways:
dynamic signaling;
RRC signaling;
system message;
broadcast message;
high-layer signaling;
core network signaling.

Optionally, the sending the configuration information to the UE, includes:
sending first configuration information to the UE, wherein the first configuration information is used to configure at least one set of third timing parameter configurations or third monitoring positions of the energy-saving signaling;
sending second configuration information to the UE, wherein the second configuration information is used to configure at least one set of first parameter sets corresponding to the at least one set of third timing parameter configuration or third monitoring position;
wherein the configuration information includes the first configuration information and the second configuration information.

Optionally, the sending first configuration information to the UE, includes:
sending the first configuration information to the UE through RRC signaling or system message or broadcast message or high-level signaling or core network signaling; or
wherein the sending second configuration information to the UE, includes:
   sending second configuration information to the UE through RRC signaling or system message or broadcast message or high-level signaling or core network signaling or dynamic signaling.

Optionally, the method further includes:
sending a network parameter to the UE, wherein the network parameter and the configuration information are used to determine the first occasion configuration parameter and/or the first monitoring position of the energy-saving signaling.

Optionally, the first occasion configuration parameter and/or the first monitoring position includes at least one of the following:
an offset of the first occasion configuration parameter and/or the first monitoring position;
a period of the first occasion configuration parameter and/or the first monitoring position;
the number of base station energy-saving timing parameter configurations or monitoring positions within the period of the first occasion configuration parameter and/or the first monitoring position;
an offset of each base station energy-saving timing parameter configuration or monitoring position within the period of the first occasion configuration parameter and/or the first monitoring position;
   and/or,
the network parameter includes one or more of the following:
   cell identifier, UE identifier, cell group identifier, number of UE groups, UE group identifier, beam identifier, and number of beams.

Optionally, the method further includes:
indicating the energy-saving signaling or indicating transmission of the energy-saving signaling through dynamic signaling.

Optionally, the energy-saving signaling includes at least one of the following:
physical layer dynamic signaling;
dynamic control signaling;
dynamic scheduling signaling;
physical layer downlink control signaling;
MAC CE.

Optionally, the energy-saving signaling includes group-common physical layer downlink signaling.

Optionally, the first occasion configuration parameter and/or the first monitoring position includes one or more of the following levels of signalling:
cell-specific;
group-common;
UE-specific.

Optionally, the first occasion configuration parameter and/or the first monitoring position includes at least one of the following:
time domain location parameter or monitoring location parameter of the energy-saving signaling;
frequency domain location parameter or monitoring location parameter of the energy-saving signaling;
spatial domain location parameter or monitoring location parameter of the energy-saving signaling.

In a third aspect, one embodiment of the present disclosure provides an information processing device, applied to a user equipment (UE), including:
a first obtaining unit used to obtain a first occasion configuration parameter and/or a first monitoring position of an energy-saving signaling from an indication of a network device;
a first processing unit used to, in response to the indication from the network device, monitor or skip the energy-saving signaling;
wherein the first occasion configuration parameter and/or the first monitoring position is used to determine whether to skip or monitor the energy-saving signaling, and the energy-saving signaling is used to indicate network energy-saving information.

In a fourth aspect, one embodiment of the present disclosure provides an information processing device applied to a network device, including:
a first sending unit used to indicate a first occasion configuration parameter and/or a first monitoring position of an energy-saving signaling to a user equipment (UE);
wherein the first occasion configuration parameter and/or the first monitoring position is used to determine whether to skip or monitor the energy-saving signaling, and the energy-saving signaling is used to indicate network energy-saving information.

In a fifth aspect, one embodiment of the present disclosure provides an information processing device, applied to a user equipment (UE), including: a memory, a transceiver, and a processor;
wherein the memory is used to store a computer program; the transceiver is used to send and receive data under the control of the processor; and the processor is used to read the computer program in the memory to perform the following operations:
obtaining a first occasion configuration parameter and/or a first monitoring position of an energy-saving signaling from an indication of a network device;
in response to the indication from the network device, monitoring or skipping the energy-saving signaling;
wherein the first occasion configuration parameter and/or the first monitoring position is used to determine whether to skip or monitor the energy-saving signaling, and the energy-saving signaling is used to indicate network energy-saving information.

In a sixth aspect, one embodiment of the present disclosure provides an information processing device, applied to a network device, including: a memory, a transceiver, and a processor;
wherein the memory is used to store a computer program; the transceiver is used to send and receive data under the control of the processor; and the processor is used to read the computer program in the memory to perform the following operations:
indicating a first occasion configuration parameter and/or a first monitoring position of an energy-saving signaling to a user equipment (UE);
wherein the first occasion configuration parameter and/or the first monitoring position is used to determine whether to skip or monitor the energy-saving signaling, and the energy-saving signaling is used to indicate network energy-saving information.

In a seventh aspect, one embodiment of the present disclosure provides a processor-readable storage medium, including a computer program stored thereon; wherein the computer program is used to cause a processor to execute steps of the above method.

In the embodiments of the present disclosure, the UE may monitor or skip the energy-saving signaling according to the first occasion configuration parameter and/or the first monitoring position of the energy-saving signaling indicated by the network device, thereby accurately monitoring the energy-saving signaling.

### BRIEF DESCRIPTION OF THE DRAWINGS

FIG. 1 is a first flowchart of an information processing method according to an embodiment of the present disclosure;
FIG. 2 is a second flowchart of an information processing method according to an embodiment of the present disclosure;
FIG. 3 is a third flowchart of an information processing method according to an embodiment of the present disclosure;
FIG. 4 is a schematic diagram showing a dynamic signaling indicating occasions of an energy-saving signaling;
FIG. 5 is a schematic diagram showing monitoring occasions corresponding to a base station energy-saving technology;
FIG. 6 is a fourth flowchart of an information processing method according to an embodiment of the present disclosure;
FIG. 7 is a fifth flowchart of an information processing method according to an embodiment of the present disclosure;
FIG. 8 is a sixth flowchart of an information processing method according to an embodiment of the present disclosure;
FIG. 9 is a schematic diagram of a dynamically indicating energy-saving signaling;
FIG. 10 is a seventh flowchart of an information processing method according to an embodiment of the present disclosure;
FIG. 11 is an eighth flowchart of an information processing method according to an embodiment of the present disclosure;
FIG. 12 is a first schematic diagram of an information processing device according to an embodiment of the present disclosure;
FIG. 13 is a second schematic diagram of an information processing device according to an embodiment of the present disclosure;
FIG. 14 is a third schematic diagram of an information processing device according to an embodiment of the present disclosure; and
FIG. 15 is a fourth schematic diagram of an information processing device according to an embodiment of the present disclosure.

### DETAILED DESCRIPTION

In the embodiment of the present application, the term "and/or" describes association relationship of associated objects, indicating that there can be three relationships, for example, A and/or B means that there are three situations: there is A alone, there are both A and B, there is B alone. The character "/" generally indicates that before and after related objects are in an "or" relationship.

In the embodiment of the present application, the term "plurality" refers to two or more than two, and other quantifiers are similar.

The technical solutions in the embodiments of the present application will be clearly and completely described below with reference to the accompanying drawings in the embodiments of the present application. Obviously, the described embodiments are only some embodiments of the present application, rather than all embodiments. Based on the embodiments in the present application, all other embodiments obtained by those of ordinary skill in the art without creative efforts fall within the scope of protection of the present application.

Embodiments of the present disclosure provide an information processing method and device for accurately monitoring energy-saving signaling.

The method and the device are based on the same application concept. Since the method and the device solve the problem in a similar principle, implementation of the device and the method can refer to each other, and the repeated parts will not be repeated.

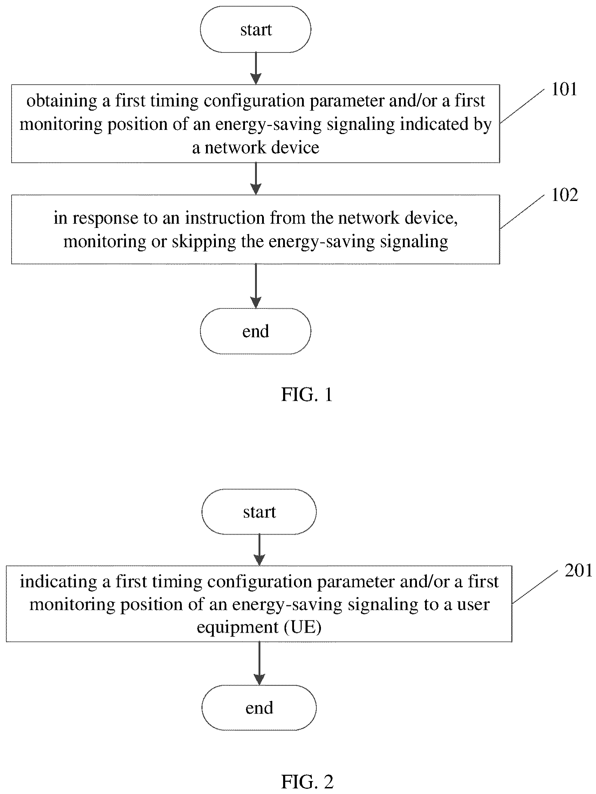

Referring to FIG. 1, FIG. 1 is a flowchart of an information processing method according to an embodiment of the present disclosure, which is applied to a user equipment (UE). as shown in FIG. 1, the method includes the following steps.

Step 101: obtaining a first occasion configuration parameter and/or a first monitoring position of an energy-saving signaling indicated by a network device.

The energy-saving signaling may also be referred to as base station energy-saving signaling. The first occasion configuration parameter and/or the first monitoring position may be understood as including parameters for determining to skip or monitor the energy-saving signaling, such as monitoring timing, monitoring position, etc. The energy-saving signaling is used to indicate network energy-saving information.

Optionally, the energy-saving signaling may include at least one of the following:
physical layer dynamic signaling; dynamic control signaling; dynamic scheduling signaling; physical layer downlink control signaling; medium access control control element (MAC CE).

For example, the energy-saving signaling may be one or more of the following: radio resource control (RRC) signaling, system message, broadcast message, high-layer signaling, core network signaling, dynamic signaling; the dynamic signaling may include at least one of the following: physical layer dynamic signaling, dynamic control signaling, dynamic scheduling signaling, physical layer downlink control signaling, MAC-CE. The first occasion configuration parameter and/or the first monitoring position may be at least one of the following signaling levels: cell-specific, group-common, and UE-specific.

Optionally, the energy-saving signaling may be configured as group-common physical layer downlink signaling.

Optionally, the group-common physical layer downlink signaling includes at least one of the following: jointly indicating time domain energy-saving information, frequency domain energy-saving information, spatial domain energy-saving information, power domain energy-saving information and other energy-saving information, as well as content of each energy-saving information.

Optionally, the group-common physical layer downlink signaling is scrambled by a dedicated radio network temporary identifier (RNTI). For example, a base station energy-saving dedicated RNTI can be defined to scramble the group-common physical layer downlink signaling.

In one embodiment of the present disclosure, the first occasion configuration parameter and/or the first monitoring position may include one or more of the following:
time domain location parameters/monitoring location parameters of energy-saving signaling, frequency domain location parameters/monitoring location parameters of energy-saving signaling, spatial domain location parameters/monitoring location parameters of energy-saving signaling.

The time domain location parameter/monitoring location parameter of the energy-saving signaling may include one or more of the following: time domain period, starting time domain location, duration length, and ending time domain location.

The time domain period includes at least one of the following:
absolute time period, such as hour, minute, second, millisecond, and microsecond;
a relative time period, for example, the relative time period is N times a time period corresponding to a first parameter or signal (N can be any number greater than zero). For example, the relative time period can be the number of radio frames, the number of slots, the number of symbols, etc. The first parameter or signal can be a discontinuous reception (DRX) parameter, a radio resource control (RRC) signaling, a downlink control information (DCI) parameter, a search space parameter, or a reference signal. The reference signal can be a coarse synchronization signal, a fine synchronization signal, a demodulation reference signal (DMRS) signal, a broadcast signal, a channel tracking signal, a channel state indication reference signal, a channel detection signal, etc. The time period corresponding to the first parameter or signal can be a period of the first parameter or signal.

The starting time domain position includes at least one of the following:
absolute time period, such as hour, minute, second, milliseconds and microsecond;
relative starting time domain position, for example, being N times the time period corresponding to the first parameter or signal (N can be any number greater than zero); for example, being an M offset relative to the first parameter. The first parameter or signal can be a DRX parameter, an RRC signaling, a DCI parameter, a search space parameter, or a reference signal. The M offset relative to the first parameter can be an absolute time offset, such as hour, minutes, second, millisecond, or microsecond. The M offset relative to the first parameter can also be a relative time offset, and the relative time offset, for example, is the number of radio frames, the number of slots, or the number of symbols; M is a positive integer greater than zero.

The duration includes at least one of the following:
absolute time period, such as hour, minute, second, millisecond, and microsecond;
relative duration, for example, being N times the time period corresponding to the first parameter or signal (N may be any number greater than zero), or, for example, being an M offset relative to the first parameter, such as the number of radio frames, the number of slots, or the number of symbols. The first parameter or signal may be a DRX parameter, an RRC signaling, a DCI parameter, a search space parameter, or a reference signal. The M offset relative to the first parameter may be an absolute time offset, such as hour, minute, second, millisecond, or microsecond; or a relative time offset, such as the number of radio frames, the number of slots, or the number of symbols; M is a positive integer greater than zero.

The end time domain position includes at least one of the following:
absolute time period, such as hour, minute, second, millisecond, microsecond;
relative end domain position, for example, it may be N times the time period corresponding to the first parameter or signal (N may be any number greater than zero); or, for example, it may be an M offset relative to the first parameter, such as the number of radio frames, the number of slots, or the number of symbols. The first parameter or signal may be a DRX parameter, an RRC signaling, a DCI parameter, a search space parameter, or a reference signal. The M offset relative to the first parameter may be an absolute time offset, such as hour, minute, second, millisecond, or microsecond; or, the M offset relative to the first parameter may be a relative time offset, such as the number of radio frames, the number of slots, or the number of symbols; M is a positive integer greater than zero.

The frequency domain location parameter/monitoring location parameter of the energy-saving signaling includes at least one of the following:
frequency domain starting position, frequency domain ending position, and size of resources occupied in frequency domain.

The frequency domain starting position may be an absolute frequency domain starting position or a relative frequency domain starting position.

The absolute frequency domain starting position is indicated by an identifier of an absolute resource occupying the bandwidth; the relative frequency domain starting position can be an offset relative to a first frequency domain position. The first frequency domain position can be indicated by an absolute resource identifier, or by a frequency domain offset relative to a second parameter. The frequency domain offset relative to the second parameter can be a frequency domain offset corresponding to RRC signaling, a frequency domain offset corresponding to a DCI parameter, a frequency domain offset corresponding to a search space parameter, a frequency domain offset corresponding to a reference signal, a frequency domain offset corresponding to a coarse synchronization signal, a frequency domain offset corresponding to a fine synchronization signal, a frequency domain offset corresponding to a DMRS signal, a frequency domain offset corresponding to a broadcast signal, a frequency domain offset corresponding to a channel tracking signal, a frequency domain offset corresponding to a channel state indication reference signal, a frequency domain offset corresponding to a channel detection signal, etc.

The frequency domain end position may be an absolute frequency domain end position or a relative frequency domain end position.

The absolute frequency domain end position can be indicated by an identifier of an absolute resource occupying the bandwidth; the relative frequency domain end position can be an offset relative to a first frequency domain position. The first frequency domain position can be indicated by an absolute resource identifier, or by a frequency domain offset relative to a second parameter. The frequency domain offset relative to the second parameter can be a frequency domain offset corresponding to RRC signaling, a frequency domain offset corresponding to a DCI parameter, a frequency domain offset corresponding to a search space parameter, a frequency domain offset corresponding to a reference signal, a frequency domain offset corresponding to a coarse synchronization signal, a frequency domain offset corresponding to a fine synchronization signal, a frequency domain offset corresponding to a DMRS signal, a frequency domain offset corresponding to a broadcast signal, a frequency domain offset corresponding to a channel tracking signal, a frequency domain offset corresponding to a channel state indication reference signal, a frequency domain offset corresponding to a channel detection signal, etc.

The size of occupied resource in frequency domain may be the number of occupied resource blocks (RB), the number of occupied resource elements (RE), frequency band bandwidth, the number of bandwidth parts (BWP), BWP identifier, carrier identifier, and the number of carriers.

The spatial domain location parameter/monitoring location of the energy-saving signaling includes at least one of the following:
the number of beams, quasi co-location (QCL) source configuration, beam status indication, and reference signal configuration of beams.

The QCL source configuration includes a QCL source reference signal configuration. The QCL source reference signal includes a synchronization signal, a channel status indication signal, a channel tracking signal, a detection signal, a demodulation reference signal, and a broadcast signal.

For the reference signal configuration of beams, the reference signal includes at least one of the following: a synchronization signal, a channel status indication signal, a channel tracking signal, a sounding signal, a demodulation reference signal, and a broadcast signal.

Optionally, the spatial domain configuration parameters/monitoring positions of the energy-saving signaling are configured as multiple beams, so that all UEs under the network device can receive the energy-saving signaling. The number of beams, beam directions, etc. corresponding to the spatial domain configuration parameters/monitoring positions of the energy-saving signaling, may be consistent with the number of beams and beam directions corresponding to a third parameter or signal. The third parameter or signal may be a synchronization signal, an energy-saving signal, a demodulation reference signal, a channel tracking signal, a channel status indication signal, a detection signal, a beam for controlling channel transmission, or a beam for data channel transmission.

The beam status indication includes at least one of the following: a transmission configuration indicator (TCI) indication and a beam direction indication.

The spatial domain location parameter/monitoring position and QCL source configuration of the energy-saving signaling may be consistent with a fourth parameter. The fourth parameter may be a synchronization signal, an energy-saving signal, a demodulation reference signal, a channel tracking signal, a channel status indication signal, or a detection signal.

Optionally, the first occasion configuration parameter and/or first monitoring position may include at least one set of first occasion configuration parameters and/or first monitoring positions.

The network energy-saving information includes at least one of the following:
time domain energy-saving information; frequency domain energy-saving information; spatial domain energy-saving information; power domain energy-saving information.

In one embodiment of the present disclosure, the first occasion configuration parameter and/or the first monitoring position of the energy-saving signaling indicated by the network device may be obtained by one or more of the following manners:
explicit manner; implicit manner; based on predefined rules.

The explicit manner includes indicating the above information through signaling or message; the implicit manner includes indicating the above information by indicating other parameters related to the above information; the based on predefined rules includes that the UE and the network device pre-agree on the above information, or pre-configure the above information, etc.

Specifically, in this step, the first occasion configuration parameter and/or the first monitoring position of the energy-saving signaling indicated by the network device through dynamic signaling is mainly obtained, including one or more of the following:
1. obtaining a first occasion configuration parameter and/or a first monitoring position of the energy-saving signaling explicitly indicated by the network device through dynamic signaling.

Specifically, this situation may include at least one of the following:
1-1. obtaining a first occasion configuration parameter and/or a first monitoring position of the energy-saving signaling directly indicated by the network device through dynamic signaling.

That is, in this manner, the network device directly indicates the first occasion configuration parameter and/or the first monitoring position of the energy-saving signaling through dynamic information.

1-2. determining at least one of a third timing parameter configuration or a third monitoring position of the energy-saving signaling activated or deactivated by the network device through dynamic signaling, where at least one of the third timing parameter configuration or the third monitoring position includes the first occasion configuration parameter and/or the first monitoring position.

The third timing parameter configuration or the third monitoring position is configured by the network device through one or more manners including RRC message, system message, broadcast message, high-layer signaling, and core network signaling. For example, if dynamic signaling activates a certain timing parameter configuration or monitoring position in the third timing parameter configurations or the third monitoring positions, then this timing parameter configuration or monitoring position can be used as the first occasion configuration parameter and/or the first monitoring position.

1-3. determining the first occasion configuration parameter and/or the first monitoring location activated or deactivated by the network device through dynamic signaling.

For example, if dynamic signaling activates a certain timing parameter configuration or monitoring position, then the timing parameter configuration or monitoring position may be used as the first occasion configuration parameter and/or the first monitoring position.

2. obtaining the first occasion configuration parameter and/or the first monitoring position of the energy-saving signaling implicitly indicated by the network device through dynamic signaling.

Optionally, in this manner, the UE may further receive configuration information sent by the network device, where the configuration information is used to indicate occasion configuration parameter or monitoring location of energy-saving signaling associated with the network device energy-saving technology (optionally, including network device energy-saving technology type), or is used to indicate occasion configuration parameter or monitoring location of energy-saving signaling associated with relevant parameters of the network device energy-saving technology.

The relevant parameters of the network device energy-saving technology include: system load, resource occupancy rate, service UE ratio, activated UE ratio, and a parameter set of the network equipment energy-saving technology.

The parameter set of the network device energy-saving technology includes at least one of the following:
types of network device energy-saving technologies, including: at least one time-domain energy-saving technology, at least one frequency-domain energy-saving technology, and at least one spatial domain energy-saving technology;
occasion configuration parameter or monitoring location time domain configuration;
occasion configuration parameter or monitoring location frequency domain configuration;
occasion configuration parameter or monitoring location spatial domain configuration.

Correspondingly, in this step, the UE can obtain information of a first network device energy-saving technology or relevant parameters of the first network device energy-saving technology indicated by the network device through dynamic signaling, where the first network device energy-saving technology is one or more of the network device energy-saving technologies; thereafter, the UE determines the first occasion configuration parameter and/or the first monitoring position of the energy-saving signaling based on the configuration information, the information of the first network device energy-saving technology or the relevant parameters of the first network device energy-saving technology.

That is, after determining the information of the first network device energy-saving technology or the relevant parameters of the first network device energy-saving technology, occasion configuration parameter or monitoring position of an energy-saving signaling associated with it can be used as the first occasion configuration parameter and/or first monitoring position of the energy-saving signaling.

3. obtaining at least one value in a first parameter set indicated by the network device through dynamic signaling, where the first parameter set includes at least one set of second occasion configuration parameters or second monitoring positions of the energy-saving signaling, and the at least one value corresponds to at least one set of parameter sets in the first parameter set. This method may include any of the following manners:
3-1. obtaining at least one value in the first parameter set explicitly indicated by the network device through dynamic signaling, specifically includes: obtaining the at least one value directly indicated by the network device through dynamic signaling; or, determining at least one value activated or deactivated by the network device through dynamic signaling.

That is, a set of parameters (i.e., the second occasion configuration parameter or the second monitoring position of the energy-saving signaling) in the first parameter set corresponding to the value, is used as the first occasion configuration parameter and/or the first monitoring position of the energy-saving signaling.

3-2. obtaining at least one value in the first parameter set implicitly indicated by the network device through dynamic signaling.

Optionally, in this manner, the UE may further receive configuration information sent by the network device, where the configuration information is used to indicate at least one value in the first parameter set associated with the network device energy-saving technology, or is used to indicate at least one value in the first parameter set associated with the relevant parameters of the network device energy-saving technology. The explanation of the network device energy-saving technology or the relevant parameters of the network device energy-saving technology may refer to the above description.

Accordingly, in this manner, the UE can obtain information of a second network device energy-saving technology or relevant parameters of the second network device energy-saving technology indicated by the network device through dynamic signaling, where the second network energy-saving technology is one or more of the network device energy-saving technologies. Then, the first occasion configuration parameter and/or the first monitoring position of the energy-saving signaling are determined according to the configuration information, the information of the second network device energy-saving technology or the relevant parameters of the second network device energy-saving technology.

That is, after determining the information of the first network device energy-saving technology associated with the value or the relevant parameters of the first network device energy-saving technology, the occasion configuration parameter or monitoring position of the energy-saving signaling associated with the information or relevant parameters can be used as the first occasion configuration parameter and/or first monitoring position of the energy-saving signaling.

4. obtaining a first occasion configuration parameter and/or a first monitoring position of the energy-saving signaling at a second moment or within a first time range indicated by the network device through dynamic signaling at a first moment.

The method may include:
determining a first occasion configuration parameter and/or a first monitoring position of an energy-saving signaling at a moment (n+k) activated or deactivated by the network device through dynamic signaling at a moment n; or,
determining a first occasion configuration parameter and/or a first monitoring position of an energy-saving signaling within a time window from a moment n to a moment (n+k) activated or deactivated by when the network device by dynamic signaling at a moment n;
where n and k are integers greater than or equal to 0.

5. obtaining a processing manner for a preset number of first occasion configuration parameters and/or the first monitoring positions of the energy-saving signaling indicated by the network device through dynamic signaling.

The processing manner may include skipping or monitoring an energy-saving signaling. The processing for this situation may specifically include: obtaining skip configuration or skip monitoring M first-occasion configuration parameters and/or first monitoring positions indicated by the network device through dynamic signaling; or obtaining configuration or monitoring L first occasion configuration parameters and/or first monitoring positions indicated by the network device through dynamic signaling;
where M and L are integers greater than or equal to 0.

By determining or obtaining the first occasion configuration parameter and/or the first monitoring position in the above different manners, flexibility of determining or obtaining the first occasion configuration parameter and/or the first monitoring position can be improved.

Step 102: in response to an instruction from the network device, monitoring or skipping the energy-saving signaling.

In this step, if the network device indicates the first occasion configuration parameter and/or the first monitoring position, or the information of the network device energy-saving technology or the relevant parameters of the network device energy-saving technology related to the first occasion configuration parameter and/or the first monitoring position, or activates the first occasion configuration parameter and/or the first monitoring position etc., then it can be determined to monitor the energy-saving signaling; otherwise, it can be determined to skip the energy-saving signaling.

For example, the monitoring of the energy-saving signaling may be determined based on the first occasion configuration parameter and/or the first monitoring position of the energy-saving signaling indicated by the dynamic signaling; for another example, the monitoring of the energy-saving signaling may be determined based on the first occasion configuration parameter and/or the first monitoring position of the energy-saving signaling activated by dynamic signaling; for another example, the skipping of the energy-saving signaling may be determined based on the first occasion configuration parameter and/or the first monitoring position of the energy-saving signaling deactivated by dynamic signaling, etc.

In one embodiment of the present disclosure, the UE may monitor or skip the energy-saving signaling according to the first occasion configuration parameter and/or the first monitoring position of the energy-saving signaling indicated by the network device, thereby accurately monitoring the energy-saving signaling.

Optionally, on the basis of the above embodiment, the method may further include:
obtaining configuration information sent by the network device, where the configuration information includes at least one set of fourth timing parameter configuration or fourth monitoring position of the energy-saving signaling. Here, the fourth timing parameter configuration or fourth monitoring position can be considered as a set formed by multiple timing parameter configurations or monitoring positions.

The configuration information sent by the network device may be obtained by one or more of the following manners:
dynamic signaling; RRC signaling; system message; broadcast message; high-layer signaling; core network signaling.

Optionally, in one embodiment of the present disclosure, first configuration information sent by the network device can be obtained, and the first configuration information is used to configure at least one set of third timing parameter configuration or a third monitoring position of the energy-saving signaling; second configuration information sent by the network device is obtained, and the second configuration information is used to configure at least one set of first parameter sets corresponding to the at least one set of third timing parameter configuration or the third monitoring position; where the configuration information includes the first configuration information and the second configuration information.

At this time, at least one set of the fourth timing parameter configuration or fourth monitoring position of the energy-saving signaling can be considered to include at least one set of the third timing parameter configuration or third monitoring position of the energy-saving signaling, and at least one set of first parameter sets corresponding to at least one set of the third timing parameter configuration or third monitoring position.

Optionally, in one embodiment of the present disclosure, the UE may also obtain network parameters sent by the network device, where the network parameters and the configuration information are used to determine first occasion configuration parameter and/or first monitoring position of the energy-saving signaling, and determine the first occasion configuration parameter and/or the first monitoring position of the energy-saving signaling based on the network parameters and the configuration information.

The first occasion configuration parameter and/or the first monitoring position includes at least one of the following: an offset of the first occasion configuration parameter and/or the first monitoring position; a period of the first occasion configuration parameter and/or the first monitoring position; the number of base station energy-saving timing parameter configurations or monitoring positions within the period of the first occasion configuration parameter and/or the first monitoring position; an offset of each base station energy-saving timing parameter configuration or monitoring position within the period of the first occasion configuration parameter and/or the first monitoring position.

The network parameters may include one or more of the following: cell identifier, UE identifier, cell group identifier, number of UE groups, UE group identifier, beam identifier, and number of beams.

Specifically, the UE may determine the first occasion configuration parameter and/or the first monitoring position of the energy-saving signaling according to the network parameter, the configuration information and function mapping relationship.

The function mapping relationship may be predefined, or agreed upon by the network device and the UE, or notified to the UE by the network device signaling. The signaling may include at least one of the following: RRC signaling configuration, system message configuration, broadcast message configuration, high-layer signaling configuration, core network signaling, dynamic signaling configuration. The dynamic signaling includes at least one of the following: physical layer dynamic signaling, dynamic control signaling, dynamic scheduling signaling, physical layer downlink control signaling, MAC CE.

Optionally, on the basis of above embodiment, the UE may also perform energy-saving operations according to the energy-saving signaling, such as time-domain energy-saving operations, spatial domain energy-saving operations, and frequency-domain energy-saving operations.

Referring to FIG. 2, FIG. 2 is a flow chart of an information processing method according to an embodiment of the present disclosure, which is applied to a network device. As shown in FIG. 2, the method includes the following steps.

Step 201: indicating a first occasion configuration parameter and/or a first monitoring position of an energy-saving signaling to a user equipment (UE).

The first occasion configuration parameter and/or the first monitoring position is used to determine whether to skip or monitor the energy-saving signaling, and the energy-saving signaling is used to indicate network energy-saving information.

The meanings of the energy-saving signaling and the network energy-saving information may refer to the description of the aforementioned method embodiment.

In this step, the network device may indicate the first occasion configuration parameter and/or the first monitoring position of the energy-saving signaling to the UE in one or more of the following manners:
explicit manner;
explicit manner;
based on predefined rules.

The meanings of the above-mentioned various manners can refer to the description of the aforementioned method embodiment.

In this step, the network device may indicate the first occasion configuration parameter and/or the first monitoring position of the energy-saving signaling to the UE through dynamic signaling, which, for example, includes at least one of the following:
1. explicitly indicating the first occasion configuration parameter and/or the first monitoring position of the energy-saving signaling through dynamic signaling.

This approach includes at least one of the following:
1-1. directly indicating the first occasion configuration parameter and/or the first monitoring position of the energy-saving signaling through dynamic signaling;
1-2. activating or deactivating at least one of a third timing parameter configuration or a third monitoring position of the energy-saving signaling through dynamic signaling, where at least one of the third timing parameter configuration or the third monitoring position includes the first occasion configuration parameter and/or the first monitoring position;
1-3. activating or deactivating the first occasion configuration parameter and/or the first monitoring location through dynamic signaling.

2. Implicitly indicating the first occasion configuration parameter and/or the first monitoring position of the energy-saving signaling through dynamic signaling.

Optionally, in this manner, the network device may also send configuration information to the UE, where the configuration information is used to indicate the occasion configuration parameter or monitoring location of an energy-saving signaling associated with the network device energy-saving technology, or is used to indicate an occasion configuration parameter or monitoring location of an energy-saving signaling associated with relevant parameters of the network device energy-saving technology.

Accordingly, this manner may include: according to the configuration information, indicating information of a first network device energy-saving technology or indicating relevant parameters of the first network device energy-saving technology through dynamic signaling, where the first network energy-saving technology is one or more of the network device energy-saving technologies.

The information of the network device energy-saving technology or the meaning of the relevant parameters of the network device energy-saving technology may refer to the description of the aforementioned method embodiment.

The configuration information may be sent in one or more of the following ways:
dynamic signaling; RRC signaling; system message; broadcast message; high-layer signaling; core network signaling.

3. Indicating at least one value in a first parameter set through dynamic signaling, where the first parameter set includes at least one set of second occasion configuration parameters or second monitoring positions of the energy-saving signaling, and the at least one value corresponds to at least one set of parameter sets in the first parameter set.

This manner may include any of the following:
3-1. explicitly indicating at least one value in the first parameter set through dynamic signaling.

This approach may include: directly indicating the at least one value through dynamic signaling; or activating or deactivating at least one value through dynamic signaling, where the value may be any value.

3-2. implicitly indicating at least one value in the first parameter set through dynamic signaling.

Optionally, in this manner, the network device may also send configuration information to the UE, where the configuration information is used to indicate at least one value in the first parameter set associated with the network device energy-saving technology, or is used to indicate at least one value in the first parameter set associated with relevant parameters of the network device energy-saving technology.

Correspondingly, this step may include: according to the configuration information, indicating information of the second network device energy-saving technology or indicating relevant parameters of the second network device energy-saving technology through dynamic signaling, where the second network energy-saving technology is one or more of the network device energy-saving technologies.

The configuration information may be sent in one or more of the following ways:
dynamic signaling; RRC signaling; system message; broadcast message; high-layer signaling; core network signaling.

4. indicating, at a first moment, through dynamic signaling, a first occasion configuration parameter and/or a first monitoring position of the energy-saving signaling at a second moment or within a first time range.

This manner may include:
activating or deactivating a first occasion configuration parameter and/or first monitoring position of the energy-saving signaling at a moment (n+k) through dynamic signaling at a moment n; or
activating or deactivating a first occasion configuration parameter and/or first monitoring position of the energy-saving signaling within a time window from a moment n to a moment (n+k) through dynamic signaling at a moment n;
where n and k are integers greater than or equal to 0.

5. indicating a processing manner for a preset number of first occasion configuration parameters and/or the first monitoring positions of the energy-saving signaling through dynamic signaling.

This manner may include:
instructing, through dynamic signaling, to skip configuring or monitoring M first occasion configuration parameters and/or first monitoring positions; or, instructing, through dynamic signaling, to configure or monitor L first occasion configuration parameters and/or first monitoring positions;
where M and L are integers greater than or equal to 0.

In the embodiment of the present disclosure, the UE may monitor or skip the energy-saving signaling according to the first occasion configuration parameter and/or the first monitoring position of the energy-saving signaling indicated by the network device, thereby accurately monitoring the energy-saving signaling.

Optionally, on the basis of the above embodiment, the network device may further send configuration information to the UE, where the configuration information includes at least one set of fourth timing parameter configuration or fourth monitoring position of the energy-saving signaling. For example, the configuration information may be sent to the UE in one or more of the following ways:
dynamic signaling; RRC signaling; system message; broadcast message; high-layer signaling; core network signaling.

Specifically, in the process of sending configuration information to the UE, the network device sends first configuration information to the UE, and the first configuration information is used to configure at least one set of third timing parameter configuration or third monitoring position of the energy-saving signaling; sends second configuration information to the UE, and the second configuration information is used to configure at least one set of first parameter sets corresponding to the at least one set of third timing parameter configuration or third monitoring position; where the configuration information includes the first configuration information and the second configuration information.

The network device can send the first configuration information to the UE through RRC signaling or system message or broadcast message or high-level signaling or core network signaling; and send the second configuration information to the UE through RRC signaling or system message or broadcast message or high-level signaling or core network signaling or dynamic signaling.

Optionally, on the basis of the above embodiment, the network device may further send network parameters to the UE, where the network parameters and the configuration information are used to determine the first occasion configuration parameter and/or the first monitoring position of the energy-saving signaling. The meaning of the network parameters may refer to the description of the above method embodiment. Optionally, the network device may further indicate information of function mapping relationship to the UE so that the UE can determine the first occasion configuration parameter and/or the first monitoring position.

The first occasion configuration parameter and/or the first monitoring position includes at least one of the following: an offset of the first occasion configuration parameter and/or the first monitoring position; a period of the first occasion configuration parameter and/or the first monitoring position; the number of base station energy-saving timing parameter configurations or monitoring positions within the period of the first occasion configuration parameter and/or the first monitoring position; an offset of each base station energy-saving timing parameter configuration or monitoring position within the period of the first occasion configuration parameter and/or the first monitoring position.

The network parameters may include one or more of the following: cell identifier, UE identifier, cell group identifier, number of UE groups, UE group identifier, beam identifier, and number of beams.

Optionally, in the embodiment of the present disclosure, the network device may also indicate the energy-saving signaling or indicate transmission of the energy-saving signaling through dynamic signaling, so that the UE can accurately receive the energy-saving signaling.

In the following embodiments, description is made by taking a network device being a base station as an example.

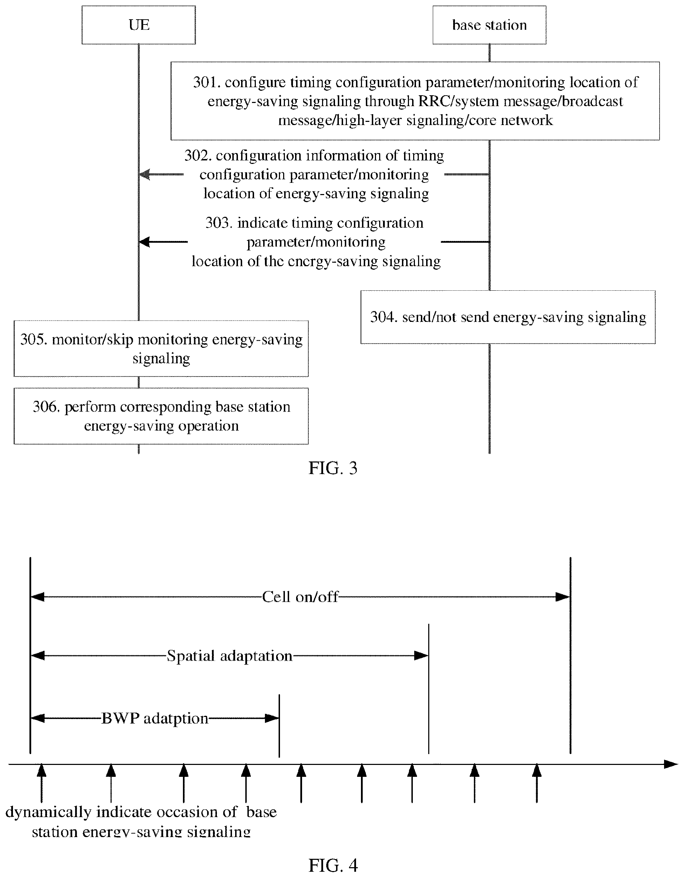

In one embodiment of the present disclosure, multiple sets of occasion configuration parameters/monitoring positions are configured through RRC/system message/broadcast message/high-level signaling/core network, and the occasion configuration parameters/monitoring positions (i.e., first occasion configuration parameters/first monitoring positions) of energy-saving signaling are indicated through dynamic signaling. As shown in FIG. 3, the method specifically includes:

At step 301, the base station configures an occasion configuration parameter/monitoring location of an energy-saving signaling, which specifically includes:
configuring the occasion configuration parameter/monitoring location in at least one of the following:
RRC signaling configuration, system message configuration, broadcast message configuration, high-layer signaling configuration, core network signaling configuration.

The energy-saving signaling may be at least one of the following:
RRC signaling, system message, broadcast message, high-layer signaling, core network signaling, dynamic signaling. The dynamic signaling includes at least one of the following: physical layer dynamic signaling, dynamic control signaling, dynamic scheduling signaling, physical layer downlink control signaling, MAC-CE.

The occasion configuration parameter/monitoring location of the energy-saving signaling may be at least one of the following signaling levels: cell-specific, group-common, and UE-specific.

Optionally, the energy-saving signaling may be configured as group-common physical layer downlink signaling.

Optionally, the group-common physical layer downlink signaling includes at least one of the following: jointly indicating time domain energy-saving information, frequency domain energy-saving information, spatial domain energy-saving information, power domain energy-saving information and other energy-saving information, as well as content of each energy-saving information.

Optionally, the group-common physical layer downlink signaling is scrambled by a dedicated radio network temporary identifier (RNTI). For example, a base station energy-saving dedicated RNTI can be defined to scramble the group-common physical layer downlink signaling.

The occasion configuration parameter/monitoring location of the energy-saving signaling includes at least one of the following:
time domain location parameters/monitoring location parameters of energy-saving signaling, frequency domain location parameters/monitoring location parameters of energy-saving signaling, spatial domain location parameters/monitoring location parameters of energy-saving signaling.

The time domain location parameter/monitoring location parameter of the energy-saving signaling may include one or more of the following: time domain period, starting time domain location, duration length, and ending time domain location.

The time domain period includes at least one of the following: absolute time period, such as hour, minute, second, millisecond, and microsecond;
a relative time period, for example, the relative time period is N times a time period corresponding to a first parameter or signal (N can be any number greater than zero). For example, the relative time period can be the number of radio frames, the number of slots, the number of symbols, etc. The first parameter or signal can be a discontinuous reception (DRX) parameter, a radio resource control (RRC) signaling, a downlink control information (DCI) parameter, a search space parameter, or a reference signal. The reference signal can be a coarse synchronization signal, a fine synchronization signal, a demodulation reference signal (DMRS) signal, a broadcast signal, a channel tracking signal, a channel state indication reference signal, a channel detection signal, etc. The time period corresponding to the first parameter or signal can be a period of the first parameter or signal.

The starting time domain position includes at least one of the following:
absolute time period, such as hour, minute, second, milliseconds and microsecond;
relative starting time domain position, for example, being N times the time period corresponding to the first parameter or signal (N can be any number greater than zero); for example, being an M offset relative to the first parameter. The first parameter or signal can be a DRX parameter, an RRC signaling, a DCI parameter, a search space parameter, or a reference signal. The M offset relative to the first parameter can be an absolute time offset, such as hour, minutes, second, millisecond, or microsecond. The M offset relative to the first parameter can also be a relative time offset, and the relative time offset, for example, is the number of radio frames, the number of slots, or the number of symbols; M is a positive integer greater than zero.

The duration includes at least one of the following:
absolute time period, such as hour, minute, second, millisecond, and microsecond;
relative duration, for example, being N times the time period corresponding to the first parameter or signal (N may be any number greater than zero), or, for example, being an M offset relative to the first parameter, such as the number of radio frames, the number of slots, or the number of symbols. The first parameter or signal may be a DRX parameter, an RRC signaling, a DCI parameter, a search space parameter, or a reference signal. The M offset relative to the first parameter may be an absolute time offset, such as hour, minute, second, millisecond, or microsecond; or a relative time offset, such as the number of radio frames, the number of slots, or the number of symbols; M is a positive integer greater than zero.

The end time domain position includes at least one of the following:
absolute time period, such as hour, minute, second, millisecond, microsecond;
relative end domain position, for example, it may be N times the time period corresponding to the first parameter or signal (N may be any number greater than zero); or, for example, it may be an M offset relative to the first parameter, such as the number of radio frames, the number of slots, or the number of symbols. The first parameter or signal may be a DRX parameter, an RRC signaling, a DCI parameter, a search space parameter, or a reference signal. The M offset relative to the first parameter may be an absolute time offset, such as hour, minute, second, millisecond, or microsecond; or, the M offset relative to the first parameter may be a relative time offset, such as the number of radio frames, the number of slots, or the number of symbols; M is a positive integer greater than zero.

The frequency domain location parameter/monitoring location parameter of the energy-saving signaling includes at least one of the following:
frequency domain starting position, frequency domain ending position, and size of resources occupied in frequency domain.

The frequency domain starting position may be an absolute frequency domain starting position or a relative frequency domain starting position.

The absolute frequency domain starting position is indicated by an identifier of an absolute resource occupying the bandwidth; the relative frequency domain starting position can be an offset relative to a first frequency domain position. The first frequency domain position can be indicated by an absolute resource identifier, or by a frequency domain offset relative to a second parameter. The frequency domain offset relative to the second parameter can be a frequency domain offset corresponding to RRC signaling, a frequency domain offset corresponding to a DCI parameter, a frequency domain offset corresponding to a search space parameter, a frequency domain offset corresponding to a reference signal, a frequency domain offset corresponding to a coarse synchronization signal, a frequency domain offset corresponding to a fine synchronization signal, a frequency domain offset corresponding to a DMRS signal, a frequency domain offset corresponding to a broadcast signal, a frequency domain offset corresponding to a channel tracking signal, a frequency domain offset corresponding to a channel state indication reference signal, a frequency domain offset corresponding to a channel detection signal, etc.

The frequency domain end position may be an absolute frequency domain end position or a relative frequency domain end position.

The absolute frequency domain end position can be indicated by an identifier of an absolute resource occupying the bandwidth; the relative frequency domain end position can be an offset relative to a first frequency domain position. The first frequency domain position can be indicated by an absolute resource identifier, or by a frequency domain offset relative to a second parameter. The frequency domain offset relative to the second parameter can be a frequency domain offset corresponding to RRC signaling, a frequency domain offset corresponding to a DCI parameter, a frequency domain offset corresponding to a search space parameter, a frequency domain offset corresponding to a reference signal, a frequency domain offset corresponding to a coarse synchronization signal, a frequency domain offset corresponding to a fine synchronization signal, a frequency domain offset corresponding to a DMRS signal, a frequency domain offset corresponding to a broadcast signal, a frequency domain offset corresponding to a channel tracking signal, a frequency domain offset corresponding to a channel state indication reference signal, a frequency domain offset corresponding to a channel detection signal, etc.

The size of occupied resource in frequency domain may be the number of occupied resource blocks (RB), the number of occupied resource elements (RE), frequency band bandwidth, the number of bandwidth parts (BWP), BWP identifier, carrier identifier, and the number of carriers.

The spatial domain location parameter/monitoring location of the energy-saving signaling includes at least one of the following:
the number of beams, quasi co-location (QCL) source configuration, beam status indication, and reference signal configuration of beams.

The QCL source configuration includes a QCL source reference signal configuration. The QCL source reference signal includes a synchronization signal, a channel status indication signal, a channel tracking signal, a detection signal, a demodulation reference signal, and a broadcast signal.

For the reference signal configuration of beams, the reference signal includes at least one of the following: a synchronization signal, a channel status indication signal, a channel tracking signal, a sounding signal, a demodulation reference signal, and a broadcast signal.

Optionally, the spatial domain configuration parameters/monitoring positions of the energy-saving signaling are configured as multiple beams, so that all UEs under the network device can receive the energy-saving signaling. The number of beams, beam directions, etc. corresponding to the spatial domain configuration parameters/monitoring positions of the energy-saving signaling, may be consistent with the number of beams and beam directions corresponding to a third parameter or signal. The third parameter or signal may be a synchronization signal, an energy-saving signal, a demodulation reference signal, a channel tracking signal, a channel status indication signal, a detection signal, a beam for controlling channel transmission, or a beam for data channel transmission.

The beam status indication includes at least one of the following: a transmission configuration indicator (TCI) indication and a beam direction indication.

The spatial domain location parameter/monitoring position and QCL source configuration of the energy-saving signaling may be consistent with a fourth parameter. The fourth parameter may be a synchronization signal, an energy-saving signal, a demodulation reference signal, a channel tracking signal, a channel status indication signal, or a detection signal.

Optionally, the first occasion configuration parameter and/or first monitoring position may include at least one set of first occasion configuration parameters and/or first monitoring positions.

At step 302, the base station sends configuration information of occasion configuration parameters/monitoring location of the energy-saving signaling. Correspondingly, the UE receives the occasion configuration parameters/monitoring location configuration information of the energy-saving signaling sent by the base station.

At step 303, the base station indicates the occasion configuration parameter/monitoring location of the energy-saving signaling according to the configuration.

The indication of the occasion configuration parameter/monitoring location of the energy-saving signaling includes a signaling indication. The signaling indication includes a dynamic signaling indication. The dynamic signaling includes at least one of the following: physical layer dynamic signaling, dynamic control signaling, dynamic scheduling signaling, physical layer downlink control signaling, MAC CE. The dynamic signaling can be at least one of the following signaling levels: cell-specific, group-common, UE-specific.

Optionally, the energy-saving signaling may be configured as group-common physical layer downlink signaling.

Further, the group-common physical layer downlink signaling includes at least one of the following: jointly indicating time domain energy-saving information, frequency domain energy-saving information, spatial domain energy-saving information, power domain energy-saving information and other energy-saving information, as well as content of each energy-saving information.

Further, the group-common physical layer downlink signaling is scrambled by a dedicated radio network temporary identifier (RNTI). For example, a base station energy-saving dedicated RNTI can be defined to scramble the group-common physical layer downlink signaling.

The indicating occasion configuration parameter/monitoring location of the energy-saving signaling includes at least one of the following:
1-1: explicitly indicating the occasion configuration parameter/monitoring location of the energy-saving signaling, which includes:
   Indicating, through dynamic signaling, occasion configuration parameter/monitoring location of the energy-saving signaling; activating/deactivating, through dynamic signaling, one or more of multiple sets of occasion configuration parameters/monitoring locations of the energy-saving signaling configured through RRC/system message/broadcast message/high-layer signaling/core network;
1-2: implicitly indicating the timing parameter configuration/monitoring location of energy-saving signaling, which includes:
   configuring, through RRC/system message/broadcast message/high-level signaling/core network, different base station energy-saving technologies (i.e., network device energy-saving technologies) to be associated with different base station energy-saving timing parameter configurations/monitoring locations, including: dynamically indicating the base station energy-saving technology (including the base station energy-saving technology type) according to the timing parameter configuration/monitoring location of the energy-saving signaling associated with the base station energy-saving technology; dynamically indicating the relevant parameters of the base station energy-saving technology according to the relevant parameters of the base station energy-saving technology, the timing parameter configuration/monitoring location of the associated energy-saving signaling; where the relevant parameters of the base station energy-saving technology include system load, resource occupancy rate, service UE ratio, activated UE ratio, and a parameter set of the base station energy-saving technology. The parameter set of the base station energy-saving technology includes the type of the base station energy-saving technology. The type of the base station energy-saving technology includes at least one time domain energy-saving technology, at least one frequency domain energy-saving technology, and at least one spatial domain energy-saving technology; the occasion configuration parameter/monitoring location time domain configuration, occasion configuration parameter/monitoring location frequency domain configuration, and occasion configuration parameter/monitoring location spatial configuration.

The occasion configuration parameter/monitoring location time domain configuration, the occasion configuration parameter/monitoring location frequency domain configuration, the occasion configuration parameter/monitoring location spatial domain configuration, etc. are the same as the description in the step 301.

As shown in FIG. 4, it shows occasions for indicating the energy-saving signaling through dynamic signaling. In the process of cell on/ff or BWP adaptation or spatial adaptation, the occasions of sending the energy-saving signaling can be indicated through dynamic signaling.

The indication signaling for indicating the occasion configuration parameter/monitoring position of the energy-saving signaling and the occasion configuration parameter/monitoring position of the energy-saving signaling in the step 301 can be carried in the same signaling or different signaling, and the signaling can refer to the description in the step 301.

Optionally, the signaling may be a group-common physical layer command.

At step 304, the base station sends/does not send the energy-saving signaling, according to the occasion configuration parameter/monitoring position of the energy-saving signaling.

Specifically, the base station sends the energy-saving signaling according to the indicated occasion configuration parameter/monitoring position of the energy-saving signaling; or, the base station does not send the energy-saving signaling according to the indicated occasion configuration parameter/monitoring position of the energy-saving signaling.

At step 305, the UE monitors/skips monitoring the energy-saving signaling according to the received occasion configuration parameter/monitoring position of the energy-saving signaling.

The UE receives the energy-saving signaling according to the received occasion configuration parameter/monitoring position indicating the energy-saving signaling from the base station; or, the UE does not receive the energy-saving signaling according to the received occasion configuration parameter/monitoring position indicating the energy-saving signaling.

At step 306, optionally, the UE performs corresponding base station energy-saving operations according to the received energy-saving signaling.

According to the received energy-saving signaling, the UE performs base station energy-saving operations including: at least one time domain base station energy-saving technology, at least one frequency domain base station energy-saving technology, at least one spatial domain base station energy-saving technology, at least one power domain base station energy-saving technology, and at least one other base station energy-saving technology.

In the embodiment of the present disclosure, at least one set of occasion configuration parameters/monitoring positions are configured through RRC/system message/broadcast message/high-level signaling/core network, and the occasion configuration parameters/monitoring positions of energy-saving signaling are explicitly/implicitly indicated through dynamic signaling, so that when different base station energy-saving technologies need to be executed, the occasion configuration parameters/monitoring positions of the base station energy-saving technologies can be dynamically adjusted, so that all UEs served by the base station can obtain the occasion configuration parameters/monitoring positions for monitoring energy-saving signaling, thereby monitoring energy-saving signaling. On the other hand, when the UE is configured with different DRX configurations, the occasion configuration parameters/monitoring positions of energy-saving signaling can also be explicitly/implicitly indicated through dynamic signaling, so that different UEs can obtain the occasion configuration parameters/monitoring positions for monitoring energy-saving signaling of the base station in different DRX configurations, thereby monitoring energy-saving signaling. In addition, when the UE is located at different geographical locations of the base station, the base station can explicitly or implicitly indicate the beam information of the occasion configuration parameters/monitoring positions of the energy-saving signaling through dynamic signaling, thereby monitoring energy-saving signaling.

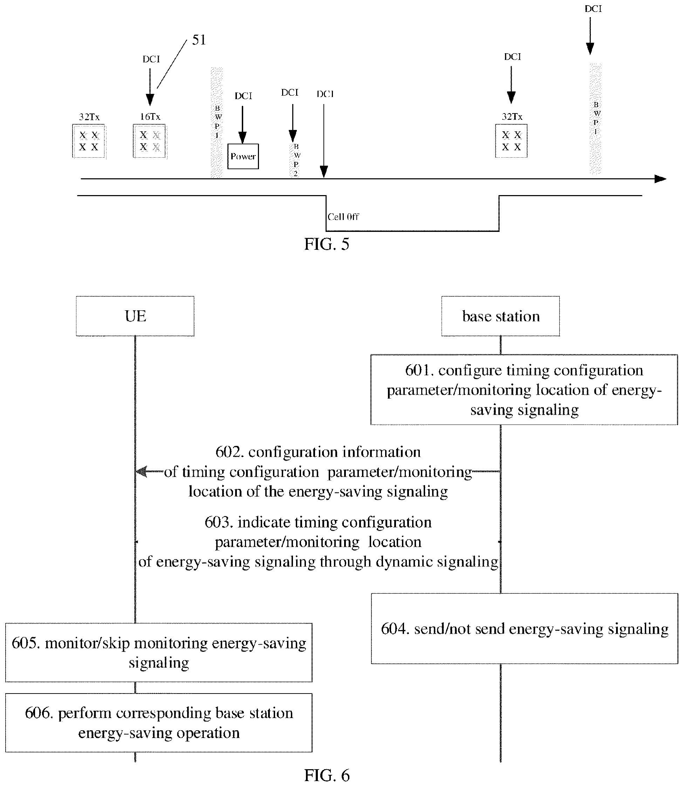

Specifically, as shown in FIG. 5, it shows monitoring occasions corresponding to the base station energy-saving technology. Referring to FIG. 5, during the process of cell on (the figure is marked with cell off, and the cell on process is outside cell off), energy-saving signaling (such as DCI) can be sent at different moments. Accordingly, the UE can detect the energy-saving signaling at the occasion corresponding to the DCI. For example, the DCI indicated by reference number 51 in the figure indicates that the number of antenna ports is adjusted from 32 to 16. Accordingly, the UE can perform energy-saving operations based on the adjusted number of antenna ports according to the energy-saving signaling.

In one embodiment of the present disclosure, the base station configures and indicates the timing parameter configuration/monitoring location of the energy-saving signaling through dynamic signaling, which, as shown in FIG. 6, specifically include:
At step 601, the base station configures an occasion configuration parameter/monitoring location of an energy-saving signaling.

Specifically, the configuring an occasion configuration parameter/monitoring location of an energy-saving signaling includes dynamic signaling configuration. The dynamic signaling configuration includes at least one of the following: physical layer dynamic signaling, dynamic control signaling, dynamic scheduling signaling, physical layer downlink control signaling, MAC-CE; the dynamic signaling can be at least one of the following levels of signaling: cell-specific, group-common, UE-specific.

Optionally, the dynamic signaling may be configured as group-common physical layer downlink signaling.

The explanation of the energy-saving signaling and occasion configuration parameter/monitoring location can refer to the description of the aforementioned embodiments.

The configuring an occasion configuration parameter/monitoring location of an energy-saving signaling includes configuring at least one set of occasion configuration parameters/monitoring location parameters.

At step 602, the base station sends configuration information of the occasion configuration parameter/monitoring location of the energy-saving signaling. Correspondingly, the UE receives the configuration information of the occasion configuration parameter/monitoring location of the energy-saving signaling sent by the base station.

At step 603, the base station indicates the occasion configuration parameter/monitoring location of the energy-saving signaling according to the configuration.

Specifically, the indication of the occasion configuration parameter/monitoring position of the energy-saving signaling includes a signaling indication. The signaling may refer to the description of the above-mentioned embodiment.

The indicating occasion configuration parameter/monitoring location of the energy-saving signaling includes at least one of the following:
2-1: explicitly indicating the occasion configuration parameter/monitoring location of the energy-saving signaling.

Configuring or indicating the occasion configuration parameter/monitoring location of the energy-saving signaling through dynamic signaling includes: configuring the occasion configuration parameter/monitoring location of energy-saving signaling through dynamic signaling; activating/deactivating occasion configuration/monitoring location of the energy-saving signaling through dynamic signaling.

2-2: implicitly indicating the timing parameter configuration/monitoring position of energy-saving signaling: configuring different base station energy-saving technologies to associate with different base station energy-saving timing parameter configurations/monitoring positions through dynamic signaling, which includes: dynamically indicating the base station energy-saving technology (including the base station energy-saving technology type) according to timing parameter configuration/monitoring position of the energy-saving signaling associated with the base station energy-saving technology; dynamically indicating the relevant parameters of the base station energy-saving technology according to the relevant parameters of the base station energy-saving technology.

The relevant parameters of the base station energy-saving technology include system load, resource occupancy rate, service UE ratio, activated UE ratio, and parameter set of the base station energy-saving technology. The parameter set of the base station energy-saving technology includes the type of the base station energy-saving technology. The type of the base station energy-saving technology includes at least one time domain energy-saving technology, at least one frequency domain energy-saving technology, and at least one spatial energy-saving technology; occasion configuration parameter/monitoring position time domain configuration, occasion configuration parameter/monitoring position frequency domain configuration, and occasion configuration parameter/monitoring position spatial configuration. The occasion configuration parameter/monitoring position time domain configuration, the occasion configuration parameter/monitoring position frequency domain configuration, the occasion configuration parameter/monitoring position spatial configuration, etc. can refer to the description of the aforementioned embodiment.

The indication signaling for indicating the occasion configuration parameter/monitoring position of the energy-saving signaling and the occasion configuration parameter/monitoring position of the energy-saving signaling in the step 601 can be carried in the same signaling or different signalings, and the signaling can refer to the description of the step 601.

Optionally, the signaling may be a group-common physical layer command.

At step 604, the base station sends/does not send the energy-saving signaling, according to indicated the occasion configuration parameter/monitoring position of the energy-saving signaling.

Specifically, the base station sends the energy-saving signaling according to the indicated occasion configuration parameter/monitoring position of the energy-saving signaling; or, the base station does not send the energy-saving signaling according to the indicated occasion configuration parameter/monitoring position of the energy-saving signaling.

At step 605, the UE monitors/skips monitoring the energy-saving signaling according to the received occasion configuration parameter/monitoring position of the energy-saving signaling.

The UE receives the energy-saving signaling according to the received occasion configuration parameter/monitoring position indicating the energy-saving signaling from the base station; or, the UE does not receive the energy-saving signaling according to the received occasion configuration parameter/monitoring position indicating the energy-saving signaling.

At step 606, optionally, the UE performs corresponding base station energy-saving operations according to the received energy-saving signaling.

According to the received energy-saving signaling, the UE performs base station energy-saving operations including: at least one time domain base station energy-saving technology, at least one frequency domain base station energy-saving technology, at least one spatial domain base station energy-saving technology, at least one power domain base station energy-saving technology, and at least one other base station energy-saving technology.

In the embodiment of the present disclosure, multiple sets of occasion configuration parameters/monitoring positions are configured through dynamic signaling, and the occasion configuration parameters/monitoring positions of energy-saving signaling are explicitly/implicitly indicated through dynamic signaling, so that when different base station energy-saving technologies need to be executed, the occasion configuration parameters/monitoring positions of the base station energy-saving technologies can be dynamically adjusted, so that all UEs served by the base station can obtain the occasion configuration parameters/monitoring positions for monitoring energy-saving signaling, thereby monitoring energy-saving signaling. On the other hand, when the UE is configured with different DRX configurations, the occasion configuration parameters/monitoring positions of energy-saving signaling can also be explicitly/implicitly indicated through dynamic signaling, so that different UEs with different DRX configurations can obtain the occasion configuration parameters/monitoring positions for monitoring energy-saving signaling of the base station, thereby monitoring energy-saving signaling. In addition, when the UE is located at different geographical locations of the base station, the base station can explicitly or implicitly indicate the beam information of the occasion configuration parameters/monitoring positions of the energy-saving signaling through dynamic signaling, thereby monitoring energy-saving signaling.

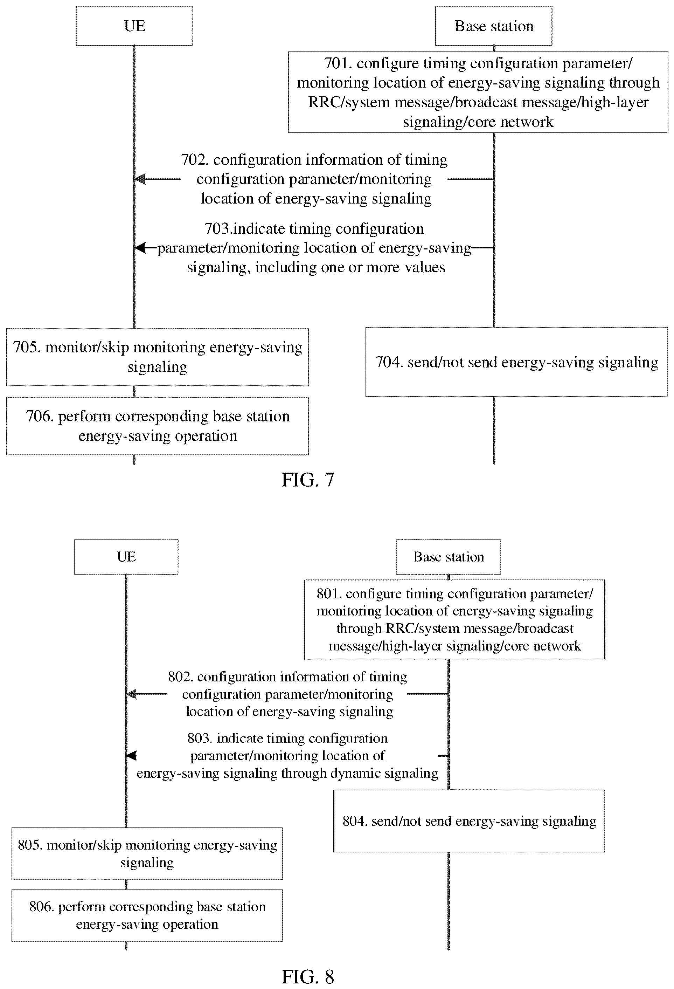

In one embodiment of the present disclosure, RRC/system message/broadcast message/high-level signaling/core network configures at least one set of occasion configuration parameter/monitoring position of energy-saving signaling as basic configuration parameter/monitoring position (referred to as occasion configuration parameter/monitoring position of first energy-saving signaling), RRC/system message/broadcast message/high-level signaling/core network configures at least one set of parameter sets related to the timing parameter configuration/monitoring positions of energy-saving signaling (referred to as a first parameter set of occasion configuration parameter/monitoring position of the first energy-saving signaling), and one or more values of the first parameter set is indicated through dynamic signaling. As shown in FIG. 7, the method specifically includes:

At step 701, the base station configures an occasion configuration parameter/monitoring location of an energy-saving signaling.

Specifically, the configuring an occasion configuration parameter/monitoring location of an energy-saving signaling includes at least one of the following:

RRC signaling configuration, system message configuration, broadcast message configuration, high-layer signaling configuration, core network signaling configuration.

Explanations of other signaling or messages involved in this step can refer to the description of the aforementioned method embodiment.

The configuring the occasion configuration parameter/monitoring location of the energy-saving signaling includes configuring at least one set of occasion configuration parameter/monitoring location parameter of the energy-saving signaling, which serves as a basic occasion configuration parameter/monitoring location parameter of the energy-saving signaling, i.e., the occasion configuration parameter/monitoring location of the first energy-saving signaling; further, configuring at least one set of parameter sets related to the occasion configuration parameters/monitoring location of the first energy-saving signaling, i.e., the first parameter set of the occasion configuration parameter/monitoring location of the first energy-saving signaling.

The first parameter set of the occasion configuration parameter/monitoring position of the first energy-saving signaling includes at least one of a time domain parameter set, a frequency domain parameter set, and a spatial domain parameter set. The time domain parameter set includes a set of time domain position parameters/monitoring position parameters of the energy-saving signaling; the frequency domain parameter set includes frequency domain position parameters/monitoring position parameters of the energy-saving signaling; the spatial domain parameter set includes spatial domain position parameters/monitoring position parameters of the energy-saving signaling.

The first parameter set includes at least one configuration of the first parameter; specifically, the time domain parameter set of the first parameter set includes at least one configuration of the time domain parameter; the frequency domain parameter set of the first parameter set includes at least one configuration of the frequency domain parameter; the spatial domain parameter set of the first parameter set includes at least one configuration of the frequency domain parameter.

The time domain location parameters/monitoring location parameters of energy-saving signaling, the frequency domain location parameters/monitoring location parameters of energy-saving signaling, the spatial domain location parameters/monitoring location parameters of energy-saving signaling, etc. can refer to the description of the aforementioned embodiments.

At step 702, the base station sends configuration information of occasion configuration parameter/monitoring location of the energy-saving signaling. Correspondingly, the UE receives the configuration information of occasion configuration parameter/monitoring location of the energy-saving signaling sent by the base station.

At step 703, the base station indicates the occasion configuration parameter/monitoring location of the energy-saving signaling according to the configuration.

Specifically, the indicating the occasion configuration parameter/monitoring position of the energy-saving signaling includes indicating one or more values of the first parameter set of the occasion configuration parameter/monitoring position of the energy-saving signaling through dynamic signaling, which further includes at least one of the following:
3-1: explicitly indicating one or more values of the first parameter set, including: indicating one or more values of the first parameter set through dynamic signaling; activating/deactivating one or more values in the first parameter set through dynamic signaling;
3-2: implicitly indicating one or more values of the first parameter set, including: configuring, through RRC/system message/broadcast message/high-level signaling/core network, different base station energy-saving technologies associated with one or more values of different first parameter sets, which includes: dynamically indicating a base station energy-saving technology (including the base station energy-saving technology type) according to one or more values of the first parameter set associated with the base station energy-saving technology; dynamically indicating the relevant parameters of the base station energy-saving technology according to one or more values of the first parameter set associated with the relevant parameters of the base station energy-saving technology.

The relevant parameters of the base station energy-saving technology include system load, resource occupancy rate, service UE ratio, activated UE ratio, and parameter set of the base station energy-saving technology. The parameter set of the base station energy-saving technology includes the type of the base station energy-saving technology. The type of the base station energy-saving technology includes at least one time domain energy-saving technology, at least one frequency domain energy-saving technology, and at least one spatial domain energy-saving technology; occasion configuration parameter/monitoring position time domain configuration, occasion configuration parameter/monitoring position frequency domain configuration, and occasion configuration parameter/monitoring position airspace configuration. The occasion configuration parameter/monitoring position time domain configuration, the occasion configuration parameter/monitoring position frequency domain configuration, and the occasion configuration parameter/monitoring position spatial domain configuration can refer to the description of the aforementioned embodiment.

The indication signaling for indicating the occasion configuration parameter/monitoring position of the energy-saving signaling and the occasion configuration parameter/monitoring position of the energy-saving signaling in the step 701 can be carried in the same signaling or different signalings, and the signaling can refer to the description of the step 701.

Optionally, the signaling may be a group-common physical layer command.

Further, the group-common physical layer downlink signaling includes at least one of the following: jointly indicating time domain energy-saving information, frequency domain energy-saving information, spatial domain energy-saving information, power domain energy-saving information and other energy-saving information, as well as content of each energy-saving information.

Optionally, the group-common physical layer downlink signaling is scrambled by a dedicated radio network temporary identifier (RNTI). For example, a base station energy-saving dedicated RNTI can be defined to scramble the group-common physical layer downlink signaling.

At step 704, the base station sends/does not send the energy-saving signaling, according to the occasion configuration parameter/monitoring position indicating the energy-saving signaling.

Specifically, the base station sends the energy-saving signaling according to the occasion configuration parameter/monitoring position indicating the energy-saving signaling; or, the base station does not send the energy-saving signaling according to the occasion configuration parameter/monitoring position indicating the energy-saving signaling.

At step 705, the UE monitors/skips monitoring the energy-saving signaling according to the received occasion configuration parameter/monitoring position of the energy-saving signaling.

The UE receives the energy-saving signaling according to the received occasion configuration parameter/monitoring position indicating the energy-saving signaling from the base station; or, the UE does not receive the energy-saving signaling according to the received occasion configuration parameter/monitoring position indicating the energy-saving signaling.

At step 706, optionally, the UE performs corresponding base station energy-saving operations according to the received energy-saving signaling.

According to the received energy-saving signaling, the UE performs base station energy-saving operations including: at least one time domain base station energy-saving technology, at least one frequency domain base station energy-saving technology, at least one spatial domain base station energy-saving technology, at least one power domain base station energy-saving technology, and at least one other base station energy-saving technology.

In the embodiment of the present disclosure, an occasion configuration parameter/monitoring position of a first energy-saving signaling is configured through RRC/system message/broadcast message/high-level signaling/core network, and a first parameter set of occasion configuration parameter/monitoring position of the occasion configuration parameter/monitoring position are configured through RRC/system message/broadcast message/high-level signaling/core network. One or more of the first parameter set are indicated through dynamic signaling, so that when different base station energy-saving technologies need to be executed, the occasion configuration parameter/monitoring position of the base station energy-saving technology can be dynamically adjusted, so that all UEs served by the base station can obtain the occasion configuration parameter/monitoring position for monitoring the energy-saving signaling, thereby monitoring the energy-saving signaling. On the other hand, when the UE is configured with different DRX configurations, the occasion configuration parameter/monitoring position of the energy-saving signaling can also be explicitly/implicitly indicated through dynamic signaling, so that different UEs with different DRX configurations can obtain the occasion configuration parameter/monitoring position for monitoring the energy-saving signaling from the base station, thereby monitoring the energy-saving signaling. In addition, when the UE is located in different geographical locations of the base station, the base station can explicitly or implicitly indicate the beam information of the occasion configuration parameter/monitoring position of the energy-saving signaling through dynamic signaling, thereby monitoring the energy-saving signaling.

In one embodiment of the present disclosure, RRC/system message/broadcast message/high-level signaling/core network/dynamic signaling configures an initial position or candidate position of the base station energy-saving timing parameter configuration/monitoring position, and the dynamic signaling is used to indicate the occasion configuration parameter/monitoring position of the energy-saving signaling. As shown in FIG. 8, the method specifically includes:
At step 801, the base station configures an occasion configuration parameter/monitoring location of an energy-saving signaling.

Specifically, the configuring the occasion configuration parameter/monitoring position of the energy-saving signaling includes configuring at least one set of occasion configuration parameters/monitoring position parameters of the energy-saving signaling as initial or candidate occasion configuration parameter/monitoring position parameter of the energy-saving signaling, i.e., an occasion configuration parameter/monitoring position of a second energy-saving signaling.

The configuring occasion configuration parameter/monitoring location of the second energy-saving signaling includes at least one of the following:
RRC signaling configuration, system message configuration, broadcast message configuration, high-layer signaling configuration, core network signaling, dynamic signaling configuration. The dynamic signaling further includes at least one of the following: physical layer dynamic signaling, dynamic control signaling, dynamic scheduling signaling, physical layer downlink control signaling, MAC-CE. The occasion configuration parameter/monitoring location of the energy-saving signaling can be at least one of the following levels of signaling: cell-specific, group-common, UE-specific. Optionally, it can be configured as group-common physical layer downlink signaling. Furthermore, the group-common physical layer downlink signaling is scrambled by a dedicated RNTI. Optionally, a base station energy-saving dedicated RNTI can be defined to scramble the group-common physical layer downlink signaling.

Explanation of other signaling or messages in this step can refer to the description of the aforementioned method embodiment.

At step 802, the base station sends configuration information of occasion configuration parameter/monitoring location of the energy-saving signaling. Correspondingly, the UE receives the configuration information of occasion configuration parameter/monitoring location of the energy-saving signaling sent by the base station.

At step 803, the base station indicates the occasion configuration parameter/monitoring location of the energy-saving signaling according to the configuration.

The indicating occasion configuration parameter/monitoring position of the energy-saving signaling includes indicating the occasion configuration parameter/monitoring position of the second energy-saving signaling through dynamic signaling.

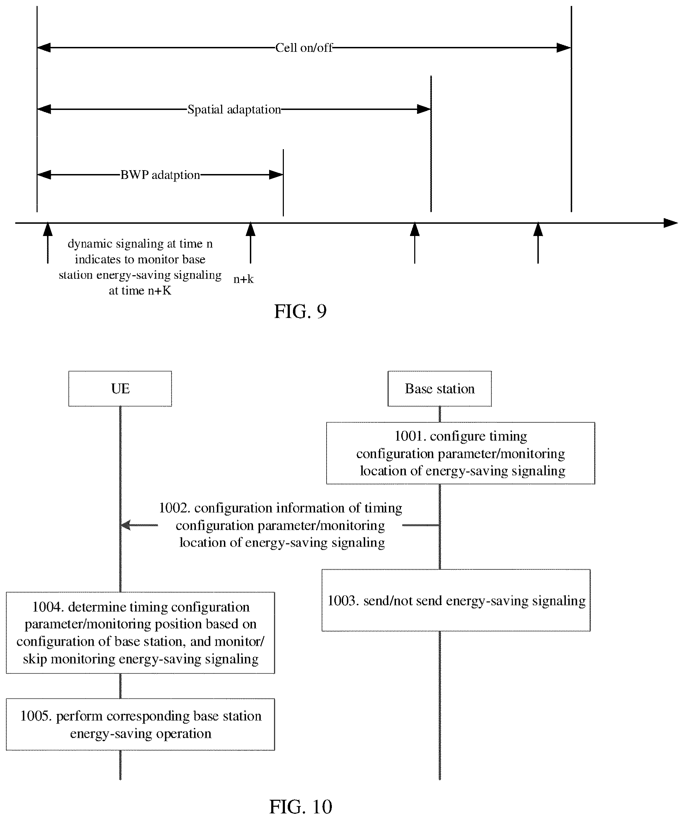

The indicating the occasion configuration parameter/monitoring location of the second energy-saving signaling through dynamic signaling includes at least one of the following:
5-1: activating/deactivating, though dynamic signaling at a moment n, a second base station energy-saving occasion parameter configuration/monitoring position at a moment (n+k), as shown in FIG. 9. FIG. 9 is a schematic diagram showing dynamic indication of energy-saving signaling in an embodiment of the present disclosure.
5-2: activating/deactivating, though dynamic signaling at a moment n, a second base station energy-saving occasion parameter configuration/monitoring position within a time window from a moment n to a moment (n+k);
5-3: indicating, through dynamic signaling, skipping configuration or monitoring of M second base station energy-saving occasion parameter configurations/monitoring locations;
5-4: indicating, through dynamic signaling, configuration or monitoring of N second base station energy-saving occasion parameter configurations/monitoring locations.

At step 804, the base station sends/does not send the energy-saving signaling, according to the occasion configuration parameter/monitoring position indicating the energy-saving signaling.

Specifically, the base station sends the energy-saving signaling according to the occasion configuration parameter/monitoring position indicating the energy-saving signaling; or, the base station does not send the energy-saving signaling according to the occasion configuration parameter/monitoring position indicating the energy-saving signaling.

At step 805, the UE monitors/skips monitoring the energy-saving signaling according to the received occasion configuration parameter/monitoring position of the energy-saving signaling.

The UE receives the energy-saving signaling according to the received occasion configuration parameter/monitoring position indicating the energy-saving signaling from the base station; or, the UE does not receive the energy-saving signaling according to the received occasion configuration parameter/monitoring position indicating the energy-saving signaling.

At step 806, optionally, the UE performs corresponding base station energy-saving operations according to the received energy-saving signaling.

According to the received energy-saving signaling, the UE performs base station energy-saving operations including: at least one time domain base station energy-saving technology, at least one frequency domain base station energy-saving technology, at least one spatial domain base station energy-saving technology, at least one power domain base station energy-saving technology, and at least one other base station energy-saving technology.

In the embodiment of the present disclosure, the occasion configuration parameter/monitoring positions of the second energy-saving signaling are configured through RRC/system message/broadcast message/high-level signaling/core network/dynamic signaling, and the dynamic signaling indicates whether to monitor the occasion configuration parameter/monitoring position of the second energy-saving signaling. In this way, when different base station energy-saving technologies need to be executed, the occasion configuration parameters/monitoring positions of the base station energy-saving technologies can be dynamically adjusted, so that all UEs served by the base station can obtain the occasion configuration parameters/monitoring positions for monitoring energy-saving signaling, thereby monitoring energy-saving signaling. On the other hand, when the UE is configured with different DRX configurations, the occasion configuration parameters/monitoring positions of energy-saving signaling can also be explicitly/implicitly indicated through dynamic signaling, so that different UEs with different DRX configurations can obtain the occasion configuration parameters/monitoring positions for monitoring energy-saving signaling of the base station, thereby monitoring energy-saving signaling. In addition, when the UE is located at different geographical locations of the base station, the base station can explicitly or implicitly indicate the beam information of the occasion configuration parameters/monitoring positions of the energy-saving signaling through dynamic signaling, thereby monitoring energy-saving signaling.

In one embodiment of the present disclosure, RRC/system message/broadcast message/high-level signaling/core network/dynamic signaling is used to configure the base station energy-saving timing parameter configuration/monitoring location, and the occasion configuration parameter/monitoring location of the energy-saving signaling is determined through a function with the base station energy-saving time parameter configuration and other network configuration parameters as independent variables; dynamic signaling is used to indicate energy-saving signaling or indicates transmission of energy-saving signaling at the occasion configuration parameter/monitoring location of the energy-saving signaling. As shown in FIG. 10, the method specifically includes:

At step 1001, the base station configures an occasion configuration parameter/monitoring location of an energy-saving signaling.

Specifically, a third parameter set of a third base station energy-saving timing parameter configuration/monitoring position is configured, and the third parameter set may include at least one of the following: an offset of the base station energy-saving timing parameter configuration/monitoring position, a period of the base station energy-saving timing parameter configuration/monitoring position, the number of base station energy-saving timing parameter configurations/monitoring positions within the period of the base station energy-saving timing parameter configuration/monitoring position, and an offset of each base station energy-saving timing parameter configuration/monitoring position within the period of the base station energy-saving timing parameter configuration/monitoring position.

The configuring the third parameter set of the third base station energy-saving opportunity parameter configuration/monitoring position includes at least one of the following:
RRC signaling configuration, system message configuration, broadcast message configuration, high-layer signaling configuration, core network signaling, dynamic signaling configuration; where the dynamic signaling further includes at least one of the following: physical layer dynamic signaling, dynamic control signaling, dynamic scheduling signaling, physical layer downlink control signaling, MAC-CE; the occasion configuration parameter/monitoring location of the energy-saving signaling can be at least one of the following levels of signaling: cell-specific, group-common, UE-specific. Optionally, it can be configured as group-common physical layer downlink signaling. Further, the group-common physical layer downlink signaling is scrambled by a dedicated RNTI. Optionally, a base station energy-saving dedicated RNTI can be defined to scramble the group-common physical layer downlink signaling.

Other network parameters are configured. The network parameters include at least one of the following: cell identifier, UE identifier, cell group identifier, number of UE groups, UE group identifier, beam identifier, number of beams.

According to the third parameter set for configuring the third base station energy-saving timing parameter configuration/monitoring position, at least one of the other network parameters is configured; and the UE obtains the base station energy-saving timing parameter configuration/monitoring position through a function mapping relationship. The function mapping relationship may be predefined, agreed upon by the base station and the UE, and signaling indication. The signaling indication may include at least one of the following: RRC signaling configuration, system message configuration, broadcast message configuration, high-layer signaling configuration, core network signaling, dynamic signaling configuration. The dynamic signaling further includes at least one of the following: physical layer dynamic signaling, dynamic control signaling, dynamic scheduling signaling, physical layer downlink control signaling, MAC-CE.

At step 1002, the base station sends configuration information of occasion configuration parameter/monitoring location of the energy-saving signaling. Correspondingly, the UE receives the configuration information of occasion configuration parameter/monitoring location of the energy-saving signaling sent by the base station.

At step 1003, the base station sends/does not send energy-saving signaling, according to the occasion configuration parameter/monitoring position indicating the energy-saving signaling.

Specifically, the base station sends the energy-saving signaling according to the occasion configuration parameter/monitoring position indicating the energy-saving signaling; or, the base station does not send the energy-saving signaling according to the occasion configuration parameter/monitoring position indicating the energy-saving signaling.

At step 1004, the UE monitors/skips monitoring the energy-saving signaling according to the occasion configuration parameter/monitoring position.

The UE obtains the occasion configuration parameter/monitoring position through a function mapping relationship according to the above configured third parameter set of the third base station energy-saving timing parameter configuration/monitoring position and at least one of the other network parameters.

The UE receives the energy-saving signaling according to the received occasion configuration parameter/monitoring position indicating the energy-saving signaling from the base station; or, the UE does not receive the energy-saving signaling according to the received occasion configuration parameter/monitoring position indicating the energy-saving signaling.

At step 1005, optionally, the UE performs corresponding base station energy-saving operations according to the received energy-saving signaling.

According to the received energy-saving signaling, the UE performs base station energy-saving operations including: at least one time domain base station energy-saving technology, at least one frequency domain base station energy-saving technology, at least one spatial domain base station energy-saving technology, at least one power domain base station energy-saving technology, and at least one other base station energy-saving technology.

In the embodiment of the present disclosure, the base station energy-saving timing parameter configuration/monitoring position is configured through RRC/system message/broadcast message/high-level signaling/core network/dynamic signaling, and the occasion configuration parameter/monitoring position of the energy-saving signaling is determined through the function with the base station energy-saving time parameter configuration and other network configuration parameters as independent variables; the dynamic signaling indicates the energy-saving signaling or indicates transmission of the energy-saving signaling at the occasion configuration parameter/monitoring position of the energy-saving signaling, so that when different base station energy-saving technologies need to be executed, the occasion configuration parameter/monitoring position of the base station energy-saving technology can be dynamically adjusted so that the UE served by the base station can obtain the timing monitoring configuration parameter/monitoring position of the energy-saving signaling, thereby monitoring the energy-saving signaling. On the other hand, when the UE is configured with different DRX configurations, the occasion configuration parameter/monitoring position of the energy-saving signaling can also be explicitly/implicitly indicated through dynamic signaling, so that different UEs with different DRX configurations can obtain the occasion configuration parameter/monitoring position for monitoring the energy-saving signaling from the base station, thereby monitoring the energy-saving signaling. In addition, when the UE is located in different geographical locations of the base station, the base station can explicitly or implicitly indicate the beam information of the occasion configuration parameter/monitoring position of the energy-saving signaling through dynamic signaling, thereby monitoring the energy-saving signaling.

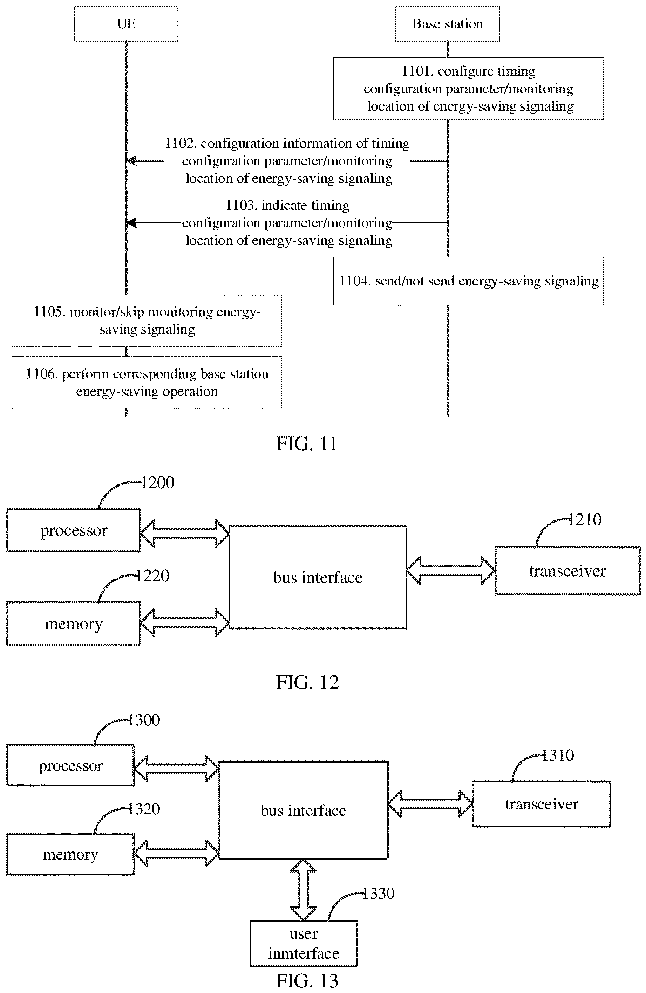

In one embodiment of the present disclosure, RRC/system message/broadcast message/high-level signaling/core network is used to configure at least one set of occasion configuration parameters/monitoring locations, and is indicated by RRC/system message/broadcast message/high-level signaling/core network, and the energy-saving signaling is RRC/system message/broadcast message/high-level signaling/core network signaling. As shown in FIG. 11, the method specifically includes:

At step 1101, the base station configures an occasion configuration parameter/monitoring location of an energy-saving signaling.

Specifically, dynamic signaling configuration includes at least one of the following: physical layer dynamic signaling, dynamic control signaling, dynamic scheduling signaling, physical layer downlink control signaling, MAC-CE; the dynamic signaling can be at least one of the following levels of signaling: cell-specific, group-common, UE-specific.

Optionally, the dynamic signaling may be configured as group-common physical layer downlink signaling.

The configuring an occasion configuration parameter/monitoring location of the energy-saving signaling includes configuring at least one set of occasion configuration parameters/monitoring location parameters.

At step 1102, the base station sends configuration information of the occasion configuration parameter/monitoring location of the energy-saving signaling. Correspondingly, the UE receives the configuration information of the occasion configuration parameter/monitoring location of the energy-saving signaling sent by the base station.

At step 1103, the base station indicates the occasion configuration parameter/monitoring location of the energy-saving signaling according to the configuration.

The indication of the occasion configuration parameter/monitoring position of the energy-saving signaling includes a signaling indication, which can refer to the description of the above method embodiment.

The indicating the occasion configuration parameter/monitoring location of the energy-saving signaling includes at least one of the following:
2-1: explicitly indicating the occasion configuration parameter/monitoring location of the energy-saving signaling. Specifically, dynamic signaling is used to configure the occasion configuration parameter/monitoring location of the energy-saving signaling. The indicating the occasion configuration/monitoring location of the energy-saving signaling through dynamic signaling includes: configuring the occasion configuration parameter/monitoring location of the energy-saving signaling through dynamic signaling; activating/deactivating the occasion configuration/monitoring location of the energy-saving signaling through dynamic signaling;
2-2: implicitly indicating the timing parameter configuration/monitoring position of the energy-saving signaling. Specifically, dynamic signaling is used to configure different base station energy-saving technologies to be associated with different base station energy-saving timing parameter configuration/monitoring positions, which includes: dynamically indicating the base station energy-saving technology (including the type of base station energy-saving technology) according to the timing parameter configuration/monitoring position of the energy-saving signaling associated with the base station energy-saving technology; dynamically indicating relevant parameters of the base station energy-saving technology according to the timing parameter configuration/monitoring location of the energy-saving signaling associated with the relevant parameters of the base station energy-saving technology; where the relevant parameters of the base station energy-saving technology include system load, resource occupancy rate, service UE ratio, activated UE ratio, and parameter set of the base station energy-saving technology. The parameter set of the base station energy-saving technology includes the type of the base station energy-saving technology. The type of the base station energy-saving technology includes at least one time domain energy-saving technology, at least one frequency domain energy-saving technology, and at least one spatial energy-saving technology; occasion configuration parameter/monitoring position time domain configuration, occasion configuration parameter/monitoring position frequency domain configuration, and occasion configuration parameter/monitoring position spatial configuration. The occasion configuration parameter/monitoring position time domain configuration, the occasion configuration parameter/monitoring position frequency domain configuration, and the occasion configuration parameter/monitoring position spatial configuration can refer to the description of the aforementioned embodiment.

The indication signaling for indicating the occasion configuration parameter/monitoring position of the energy-saving signaling, and the occasion configuration parameter/monitoring position of the energy-saving signaling in the step 1101 may be carried in the same signaling or in different signalings.

Optionally, it can be a group-common physical layer command.

At step 1104, the base station sends/does not send the energy-saving signaling, according to the occasion configuration parameter/monitoring position indicating the energy-saving signaling.

Specifically, the base station sends the energy-saving signaling according to the occasion configuration parameter/monitoring position indicating the energy-saving signaling; or, the base station does not send the energy-saving signaling according to the occasion configuration parameter/monitoring position indicating the energy-saving signaling.

At step 1105, the UE monitors/skips monitoring the energy-saving signaling according to the received occasion configuration parameter/monitoring position of the energy-saving signaling.

The UE receives the energy-saving signaling according to the received occasion configuration parameter/monitoring position indicating the energy-saving signaling from the base station; or, the UE does not receive the energy-saving signaling according to the received occasion configuration parameter/monitoring position indicating the energy-saving signaling.

At step 1106, optionally, the UE performs corresponding base station energy-saving operations according to the received energy-saving signaling.

According to the received energy-saving signaling, the UE performs base station energy-saving operations including: at least one time domain base station energy-saving technology, at least one frequency domain base station energy-saving technology, at least one spatial domain base station energy-saving technology, at least one power domain base station energy-saving technology, and at least one other base station energy-saving technology.

In the embodiment of the present disclosure, multiple sets of occasion configuration parameters/monitoring positions are configured through dynamic signaling, and the occasion configuration parameters/monitoring positions of energy-saving signaling are explicitly/implicitly indicated through dynamic signaling, so that when different base station energy-saving technologies need to be executed, the occasion configuration parameters/monitoring positions of the base station energy-saving technologies can be dynamically adjusted, so that all UEs served by the base station can obtain the occasion configuration parameters/monitoring positions for monitoring energy-saving signaling, thereby monitoring energy-saving signaling. On the other hand, when the UE is configured with different DRX configurations, the occasion configuration parameters/monitoring positions of energy-saving signaling can also be explicitly/implicitly indicated through dynamic signaling, so that different UEs with different DRX configurations can obtain the occasion configuration parameters/monitoring positions for monitoring energy-saving signaling of the base station, thereby monitoring energy-saving signaling. In addition, when the UE is located at different geographical locations of the base station, the base station can explicitly or implicitly indicate the beam information of the occasion configuration parameters/monitoring positions of the energy-saving signaling through dynamic signaling, thereby monitoring energy-saving signaling.

The technical solutions provided in the embodiments of the present disclosure may be applicable to various systems, especially the fifth generation communication (5G) system. For example, applicable systems may be global system of mobile communication (GSM) system, code division multiple access (CDMA) system, wideband code division multiple access (WCDMA) general packet wireless service (GPRS) system, long term evolution (LTE) system, LTE frequency division duplex (FDD) system, LTE time division duplex (TDD) system, long term evolution advanced (LTE-A) system, universal mobile telecommunication system (UMTS), worldwide interoperability for microwave access (WiMAX) system, 5G new radio (NR) system, etc. Each of the various systems includes a user equipment and a network device. The system may further include a core network part, such as an evolved packet system (EPS), a 5G system (5GS).

Terminal devices involved in the embodiments of the present disclosure may be a device that provides voice and/or data connectivity to a user, a handheld device with a wireless connection function, or other processing device coupled to a wireless modem. In different systems, names of terminal devices may be different. For example, in the 5G system, the terminal device may be referred as user equipment (UE). A wireless terminal device may communicate with one or more core networks (CN) via a radio access network (RAN). The wireless terminal device may be a mobile terminal device such as a mobile phone (or referred as cell phone), or a computer with a mobile terminal device, such as a portable, pocket-sized, handheld, computer built-in or vehicle-mounted mobile device, which exchange language and/or data with wireless access networks, for example, a personal communication service (PCS) phone, a cordless phone, a session initiated protocol (SIP) phone, a wireless local loop (WLL) station, a personal digital assistant (PDA) and other device. The wireless terminal device may also be referred to as system, subscriber unit, subscriber station, mobile station, mobile, remote station, access point, remote terminal, access terminal, user terminal, user agent, or user device, which are not limited in the embodiments of the present disclosure.

The network device involved in the embodiments of the present disclosure may be a base station, and the base station may include a plurality of cells for providing services for the terminal. According to different specific application scenarios, the base station may also be referred as an access point, or the base station may be a device in an access network that communicates with wireless terminal devices through one or more sectors on air interfaces, or other names. The network device may be used to exchange received frames with internet protocol (IP) packets, and act as a router between the wireless terminal device and the rest of the access network, where the rest of the access network may include an internet protocol (IP) communication network. The network device may also coordinate attribute management for air interfaces. For example, the network device involved in the embodiments of the present disclosure may be a base transceiver station (BTS) in global system for mobile communications (GSM) or code division multiple access (CDMA), a NodeB in wide-band code division multiple access (WCDMA), an evolutional Node B (eNB or e-NodeB) in long term evolution (LTE) system, a 5G base station (gNB) in the 5G network architecture (next generation system), a home evolved Node B (HeNB), a relay node, a femto, or a pico, which are not limited in the embodiments of the present disclosure. In some network structures, the network device may include a centralized unit (CU) node and a distributed unit (DU) node; and the centralized unit and the distributed unit may also be geographically separated.

Each of the network device and the terminal can use one or more antennas for multi input multi output (MIMO) transmission between the network device and the terminal. The MIMO transmission may be single user MIMO (SU-MIMO), or multiple user MIMO (MU-MIMO). According to forms and numbers of antenna combinations, MIMO transmission may be two dimensional-MIMO (2D-MIMO), three dimensional-MIMO (3D-MIMO), full dimensional-MIMO (FD-MIMO), or massive-MIMO, or diversity transmission, precoding transmission, or beamforming transmission.

As shown in FIG. 12, an information processing device according to an embodiment of the present disclosure is applied to a network device, and includes:
a processor 1200 used to read a program in a memory 1220 and execute the following process: indicating a first occasion configuration parameter and/or a first monitoring position of an energy-saving signaling to a user equipment (UE); where the first occasion configuration parameter and/or the first monitoring position is used to determine whether to skip or monitor the energy-saving signaling, and the energy-saving signaling is used to indicate network energy-saving information; and
a transceiver 1210 used to receive and send data under the control of the processor 1200.

In FIG. 12, a bus architecture may include any number of interconnected bus and bridge. Specifically, various circuits of one or more processors, which are represented by the processor 1200, and one or more memories, which are represented by the memory 1220, are linked together. The bus architecture may link various other circuits, such as a peripheral device, voltage regulator and a power management circuit together. These features are well known in this field; therefore, the present disclosure does not make further description on these features. The bus interface provides an interface. The transceiver 1210 may be multiple elements, including a transmitter and a receiver and provide units, which communicate with other devices on the transmission medium. The processor 1200 is responsible for managing the bus architecture and the normal processing. The memory 1220 may be used to store data used by the processor 1200 for performing operations.

Optionally, the processor 1200 may be a central processing unit (CPU), an application specific integrated circuit (ASIC), a field-programmable gate array (FPGA) or a complex programmable logic device (CPLD). The processor may also adopt multi-core architecture.

The processor 610 calls the computer program stored in the memory to execute any of the methods provided by the embodiments of the present disclosure according to obtained executable instructions. The processor 610 and the memory 620 may also be arranged physically separately.

The processor 1200 is responsible for managing the bus architecture and the normal processing. The memory 1220 may be used to store data used by the processor 1200 for performing operations.

Optionally, the network energy-saving information includes at least one of the following:
time domain energy-saving information;
frequency domain energy-saving information;
spatial domain energy-saving information;
power domain energy-saving information.

The processor 1200 is further used to read the program and execute the following steps:
indicating the first occasion configuration parameter and/or the first monitoring position of the energy-saving signaling to the UE through dynamic signaling.

The processor 1200 is further used to read the program and execute the following steps:
indicating the first occasion configuration parameter and/or the first monitoring position of the energy-saving signaling to the UE in one or more of the following manners:
explicit manner;
explicit manner;
based on predefined rules.

The processor 1200 is further used to read the program and execute the following steps:
explicitly indicating the first occasion configuration parameter and/or the first monitoring position of the energy-saving signaling through dynamic signaling;
implicitly indicating the first occasion configuration parameter and/or the first monitoring position of the energy-saving signaling through dynamic signaling;
indicating at least one value in a first parameter set through dynamic signaling, where the first parameter set includes at least one set of second occasion configuration parameters or second monitoring positions of the energy-saving signaling, and the at least one value corresponds to at least one set of parameter sets in the first parameter set;
indicating, at a first moment, through dynamic signaling, a first occasion configuration parameter and/or a first monitoring position of the energy-saving signaling at a second moment or within a first time range;
indicating a processing manner for a preset number of first occasion configuration parameters and/or the first monitoring positions of the energy-saving signaling through dynamic signaling.

The processor 1200 is further used to read the program and execute the following steps:
directly indicating the first occasion configuration parameter and/or the first monitoring position of the energy-saving signaling through dynamic signaling;
activating or deactivating at least one of a third timing parameter configuration or a third monitoring position of the energy-saving signaling through dynamic signaling, where at least one of the third timing parameter configuration or the third monitoring position includes the first occasion configuration parameter and/or the first monitoring position;
activating or deactivating the first occasion configuration parameter and/or the first monitoring location through dynamic signaling.

The processor 1200 is further used to read the program and execute the following steps:
sending configuration information to the UE, where the configuration information is used to indicate an occasion configuration parameter or monitoring location of an energy-saving signaling associated with the network device energy-saving technology, or is used to indicate an occasion configuration parameter or monitoring location of an energy-saving signaling associated with relevant parameters of the network device energy-saving technology;
according to the configuration information, indicating, through dynamic signaling, information of a first network device energy-saving technology or relevant parameters of the first network device energy-saving technology; where the first network energy-saving technology is one or more of the network device energy-saving technologies.

The processor 1200 is further used to read the program and execute the following steps:
explicitly indicating at least one value in the first parameter set through dynamic signaling; or
implicitly indicating at least one value in the first parameter set through dynamic signaling.

The processor 1200 is further used to read the program and execute the following steps:
directly indicating the at least one value by dynamic signaling; or
activating or deactivating the at least one value by dynamic signaling.

The processor 1200 is further used to read the program and execute the following steps:
sending configuration information to the UE, where the configuration information is used to indicate at least one value in the first parameter set associated with the network device energy-saving technology, or used to indicate at least one value in the first parameter set associated with a relevant parameter of the network device energy-saving technology;
according to the configuration information, indicating, through dynamic signaling, information of the second network device energy-saving technology or relevant parameters of the second network device energy-saving technology, where the second network energy-saving technology is one or more of the network device energy-saving technologies.

The processor 1200 is further used to read the program and execute the following steps: sending configuration information to the UE in one or more of the following ways:
dynamic signaling;
RRC signaling;
system messages;
broadcast messages;
high-level signaling;
core network signaling.

Optionally, the relevant parameters include at least one of the following:
system load, resource occupancy rate, service UE ratio, activated UE ratio, and a parameter set of the base station energy-saving technology.

The parameter set of the base station energy-saving technology includes at least one of the following:
a type of the base station energy-saving technology, which includes at least one time domain energy-saving technology, at least one frequency domain energy-saving technology, and at least one spatial domain energy-saving technology;
occasion configuration parameter/monitoring location time domain configuration;
occasion configuration parameter/monitoring location frequency domain configuration,
occasion configuration parameter/monitoring location spatial configuration.

The processor 1200 is further used to read the program and execute the following steps:
activating or deactivating a first occasion configuration parameter and/or first monitoring position of the energy-saving signaling at a moment (n+k) through dynamic signaling at a moment n; or
activating or deactivating a first occasion configuration parameter and/or first monitoring position of the energy-saving signaling within a time window from a moment n to a moment (n+k) through dynamic signaling at a moment n;
where n and k are integers greater than or equal to 0.

The processor 1200 is further used to read the program and execute the following steps:
instructing, through dynamic signaling, to skip configuring or monitoring M first occasion configuration parameters and/or first monitoring positions; or,
instructing, through dynamic signaling, to configure or monitor L first occasion configuration parameters and/or first monitoring positions;
where M and L are integers greater than or equal to 0.

The processor 1200 is further used to read the program and execute the following steps:
sending the configuration information to the UE, where the configuration information includes at least one set of fourth timing parameter configuration or fourth monitoring position of the energy-saving signaling.

The processor 1200 is further used to read the program and execute the following steps:
sending the configuration information to the UE in one or more of the following ways:
dynamic signaling;
RRC signaling;
system message;
broadcast message;
high-layer signaling;
core network signaling.

The processor 1200 is further used to read the program and execute the following steps:
sending first configuration information to the UE, where the first configuration information is used to configure at least one set of third timing parameter configuration or third monitoring position of the energy-saving signaling;
sending second configuration information to the UE, where the second configuration information is used to configure at least one set of first parameter sets corresponding to the at least one set of third timing parameter configuration or third monitoring position; where the configuration information includes the first configuration information and the second configuration information.

The processor 1200 is further used to read the program and execute the following steps:
sending first configuration information to the UE through RRC signaling or system message or broadcast message or high-level signaling or core network signaling; or
sending second configuration information to the UE through RRC signaling or system message or broadcast message or high-level signaling or core network signaling or dynamic signaling.

The processor 1200 is further used to read the program and execute the following steps:
sending network parameters to the UE, where the network parameters and the configuration information are used to determine the first occasion configuration parameter and/or the first monitoring position of the energy-saving signaling.

Optionally, the first occasion configuration parameter and/or the first monitoring position includes at least one of the following:
an offset of the first occasion configuration parameter and/or the first monitoring position;
a period of the first occasion configuration parameter and/or the first monitoring position;
the number of base station energy-saving timing parameter configurations or monitoring positions within the period of the first occasion configuration parameter and/or the first monitoring position;
an offset of each base station energy-saving timing parameter configuration or monitoring position within the period of the first occasion configuration parameter and/or the first monitoring position;
   and/or,
the network parameters include one or more of the following:
   cell identifier, UE identifier, cell group identifier, number of UE groups, UE group identifier, beam identifier, and number of beams.

The processor 1200 is further used to read the program and execute the following steps:
indicating the energy-saving signaling or indicating transmission of the energy-saving signaling through dynamic signaling.

Optionally, the energy-saving signaling includes at least one of the following:
physical layer dynamic signaling;
dynamic control signaling;
dynamic scheduling signaling;
physical layer downlink control signaling;
MAC CE.

Optionally, the energy-saving signaling includes group-common physical layer downlink signaling.

Optionally, the first occasion configuration parameter and/or the first monitoring position includes one or more of the following levels of signalling:
cell-specific;
group-common;
UE-specific.

Optionally, the first occasion configuration parameter and/or the first monitoring position includes at least one of the following:
time domain location parameter or monitoring location parameter of the energy-saving signaling;
frequency domain location parameter or monitoring location parameter of the energy-saving signaling;
spatial domain location parameter or monitoring location parameter of the energy-saving signaling.

It is to be noted that the foregoing device provided in the embodiments of the present disclosure can perform all the method steps performed in the foregoing method embodiments, and can achieve the same technical effect. The parts and beneficial effects in this embodiment that are the same as those in the method embodiment will not be described in detail here.

As shown in FIG. 13, an information processing device according to an embodiment of the present disclosure is applied to a user equipment (UE), and includes:
a processor 1300 used to read a program in a memory 1320 and execute the following process: obtaining a first occasion configuration parameter and/or a first monitoring position of an energy-saving signaling indicated by a network device; in response to an instruction from the network device, monitoring or skipping the energy-saving signaling; where the first occasion configuration parameter and/or the first monitoring position is used to determine whether to skip or monitor the energy-saving signaling, and the energy-saving signaling is used to indicate network energy-saving information;
a transceiver 1310 used to receive and send data under the control of the processor 1300.

In FIG. 13, a bus architecture may include any number of interconnected bus and bridge. Specifically, various circuits of one or more processors, which are represented by the processor 1300, and one or more memories, which are represented by the memory 1320, are linked together. The bus architecture may link various other circuits, such as a peripheral device, voltage regulator and a power management circuit together. These features are well known in this field; therefore, the present disclosure does not make further description on these features. The bus interface provides an interface. The transceiver 1310 may be multiple elements, including a transmitter and a receiver and provide units, which communicate with other devices on the transmission medium. For different UEs, a user interface 1330 may be an interface that can be connected to external or internal devices. The connected devices include but are not limited to a small keyboard, a display, a speaker, a microphone, a joystick, etc.

The processor 1300 is responsible for managing the bus architecture and the normal processing. The memory 1320 may be used to store data used by the processor 1300 for performing operations.

Optionally, the processor 1300 may be a central processing unit (CPU), an application specific integrated circuit (ASIC), a field-programmable gate array (FPGA) or a complex programmable logic device (CPLD). The processor may also adopt multi-core architecture.

The processor calls the computer program stored in the memory to execute any of the methods provided by the embodiments of the present disclosure according to obtained executable instructions. The processor and the memory may also be arranged physically separately.

Optionally, the network energy-saving information includes at least one of the following:
time domain energy-saving information;
frequency domain energy-saving information;
spatial domain energy-saving information;
power domain energy-saving information.

The processor 1300 is further used to read the program and execute the following steps:
obtaining the first occasion configuration parameter and/or the first monitoring position of the energy-saving signaling indicated by the network device in one or more of the following manners:
explicit manner;
explicit manner;
based on predefined rules.

The processor 1300 is further used to read the program and execute the following steps:
obtaining a first occasion configuration parameter and/or a first monitoring position of the energy-saving signaling indicated by the network device through dynamic signaling.

The processor 1300 is further used to read the program and execute the following steps:
obtaining the first occasion configuration parameter and/or the first monitoring position of the energy-saving signaling explicitly indicated by the network device through dynamic signaling;
obtaining the first occasion configuration parameter and/or the first monitoring position of the energy-saving signaling implicitly indicated by the network device through dynamic signaling;
obtaining at least one value in a first parameter set indicated by the network device through dynamic signaling, where the first parameter set includes at least one set of second occasion configuration parameter or second monitoring position of the energy-saving signaling, and the at least one value corresponds to at least one set of parameter sets in the first parameter set;
obtaining a first occasion configuration parameter and/or a first monitoring position of the energy-saving signaling at a second moment or a first time range indicated by the network device through dynamic signaling at a first moment;
obtaining a processing manner for a preset number of first occasion configuration parameters and/or the first monitoring positions of the energy-saving signaling indicated by the network device through dynamic signaling.

The processor 1300 is further used to read the program and execute the following steps:
obtaining the first occasion configuration parameter and/or the first monitoring position of the energy-saving signaling directly indicated by the network device through dynamic signaling;
determining at least one of a third timing parameter configuration or a third monitoring position of the energy-saving signaling activated or deactivated by the network device through dynamic signaling, where at least one of the third timing parameter configuration or the third monitoring position includes the first occasion configuration parameter and/or the first monitoring position;
determining the first occasion configuration parameter and/or the first monitoring location activated or deactivated by the network device through dynamic signaling.

The processor 1300 is further used to read the program and execute the following steps:
receiving configuration information sent by the network device, where the configuration information is used to indicate an occasion configuration parameter or monitoring location of an energy-saving signaling associated with the network device energy-saving technology, or is used to indicate an occasion configuration parameter or monitoring location of an energy-saving signaling associated with relevant parameters of the network device energy-saving technology;
obtaining information of a first network device energy-saving technology or relevant parameters of the first network device energy-saving technology indicated by the network device through dynamic signaling, where the first network energy-saving technology is one or more of the network device energy-saving technologies;
determining the first occasion configuration parameter and/or the first monitoring position of the energy-saving signaling according to the configuration information, the information of the first network device energy-saving technology or the relevant parameters of the first network device energy-saving technology.

The processor 1300 is further used to read the program and execute the following steps:
obtaining at least one value in a first parameter set explicitly indicated by the network device through dynamic signaling; or
obtaining at least one value in the first parameter set implicitly indicated by the network device through dynamic signaling.

The processor 1300 is further used to read the program and execute the following steps:
obtaining the at least one value directly indicated by the network device through dynamic signaling; or
determining at least one value activated or deactivated by the network device through dynamic signaling.

The processor 1300 is further used to read the program and execute the following steps:
receiving configuration information sent by the network device, where the configuration information is used to indicate at least one value in the first parameter set associated with the network device energy-saving technology, or is used to indicate at least one value in the first parameter set associated with relevant parameters of the network device energy-saving technology;
obtaining information of a second network device energy-saving technology or relevant parameters of the second network device energy-saving technology indicated by the network device through dynamic signaling, where the second network energy-saving technology is one or more of the network device energy-saving technologies;
determining the first occasion configuration parameter and/or the first monitoring position of the energy-saving signaling according to the configuration information, the information of the second network device energy-saving technology or the relevant parameters of the second network device energy-saving technology.

The processor 1300 is further used to read the program and execute the following steps:
determining a first occasion configuration parameter and/or a first monitoring position of an energy-saving signaling at a moment (n+k) activated or deactivated by dynamic signaling of the network device at a moment n; or
determining a first occasion configuration parameter and/or a first monitoring position of an energy-saving signaling within a time window from a moment n to a moment (n+k), activated or deactivated by dynamic signaling of the network device at a moment n;
where n and k are integers greater than or equal to 0.

The processor 1300 is further used to read the program and execute the following steps:
obtaining an instruction of skipping configuring or monitoring M first occasion configuration parameters and/or first monitoring positions, indicated by the network device through dynamic signaling; or
obtaining an instruction of configuring or monitoring L first occasion configuration parameters and/or first monitoring positions, indicated by the network device through dynamic signaling;
where M and L are integers greater than or equal to 0.

The processor 1300 is further used to read the program and execute the following steps:
obtaining configuration information sent by the network device, where the configuration information includes at least one set of fourth timing parameter configuration or fourth monitoring position of the energy-saving signaling.

The processor 1300 is further used to read the program and execute the following steps:
obtaining the configuration information sent by the network device in one or more of the following manners:
dynamic signaling;
radio resource control RRC signaling;
system message;
broadcast message;
high-level signaling;
core network signaling.

The processor 1300 is further used to read the program and execute the following steps:
obtaining first configuration information sent by the network device, where the first configuration information is used to configure at least one set of third timing parameter configuration or third monitoring position of the energy-saving signaling;
obtaining second configuration information sent by the network device, where the second configuration information is used to configure at least one set of first parameter sets corresponding to the at least one set of third timing parameter configurations or the third monitoring position;
where the configuration information includes the first configuration information and the second configuration information.

The processor 1300 is further used to read the program and execute the following steps:
obtaining network parameters sent by the network device, where the network parameters and the configuration information are used to determine a first occasion configuration parameter and/or a first monitoring position of the energy-saving signaling;
determining a first occasion configuration parameter and/or a first monitoring position of the energy-saving signaling according to the network parameter and the configuration information.

The processor 1300 is further used to read the program and execute the following steps:
performing an energy-saving operation according to the energy-saving signaling.

Optionally, the energy-saving signaling includes group-common physical layer downlink signaling.

It is to be noted that the foregoing device provided in the embodiments of the present disclosure can perform all the method steps performed in the foregoing method embodiments, and can achieve the same technical effect. The parts and beneficial effects in this embodiment that are the same as those in the method embodiment will not be described in detail here.

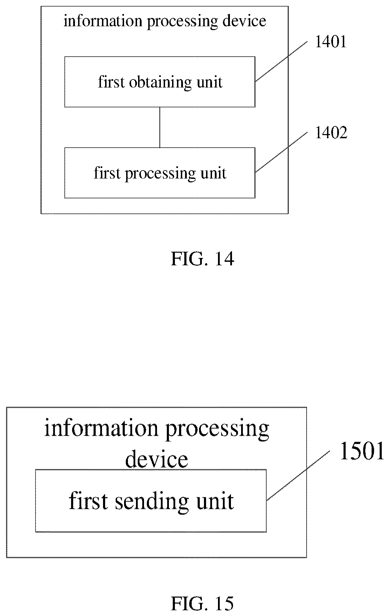

As shown in FIG. 14, an information processing device according to one embodiment of the present disclosure is applied to a UE and includes:
a first obtaining unit 1401 used to obtain a first occasion configuration parameter and/or a first monitoring position of an energy-saving signaling indicated by a network device;
a first processing unit 1402 used to, in response to an instruction from the network device, monitoring or skipping the energy-saving signaling;
where the first occasion configuration parameter and/or the first monitoring position is used to determine whether to skip or monitor the energy-saving signaling, and the energy-saving signaling is used to indicate network energy-saving information.

Optionally, the network energy-saving information includes at least one of the following:
time domain energy-saving information;
frequency domain energy-saving information;
spatial domain energy-saving information;
power domain energy-saving information.

The first obtaining unit is further used to obtain the first occasion configuration parameter and/or the first monitoring position of the energy-saving signaling indicated by the network device in one or more of the following manners:
explicit manner;
explicit manner;
based on predefined rules.

The first obtaining unit is further used to:
obtain a first occasion configuration parameter and/or a first monitoring position of the energy-saving signaling indicated by the network device through dynamic signaling.

The first obtaining unit is further used to one or more of the following steps:
obtaining the first occasion configuration parameter and/or the first monitoring position of the energy-saving signaling explicitly indicated by the network device through dynamic signaling;
obtaining the first occasion configuration parameter and/or the first monitoring position of the energy-saving signaling implicitly indicated by the network device through dynamic signaling;
obtaining at least one value in a first parameter set indicated by the network device through dynamic signaling, where the first parameter set includes at least one set of second occasion configuration parameter or second monitoring position of the energy-saving signaling, and the at least one value corresponds to at least one set of parameter sets in the first parameter set;
obtaining a first occasion configuration parameter and/or a first monitoring position of the energy-saving signaling at a second moment or a first time range indicated by the network device through dynamic signaling at a first moment;
obtaining a processing manner for a preset number of first occasion configuration parameters and/or the first monitoring positions of the energy-saving signaling indicated by the network device through dynamic signaling.

The first obtaining unit is further used to execute one the following steps:
obtaining the first occasion configuration parameter and/or the first monitoring position of the energy-saving signaling directly indicated by the network device through dynamic signaling;
determining at least one of a third timing parameter configuration or a third monitoring position of the energy-saving signaling activated or deactivated by the network device through dynamic signaling, where at least one of the third timing parameter configuration or the third monitoring position includes the first occasion configuration parameter and/or the first monitoring position;
determining the first occasion configuration parameter and/or the first monitoring location activated or deactivated by the network device through dynamic signaling.

The device further includes
a first receiving unit used to receive configuration information sent by the network device, where the configuration information is used to indicate an occasion configuration parameter or monitoring location of an energy-saving signaling associated with the network device energy-saving technology, or is used to indicate an occasion configuration parameter or monitoring location of an energy-saving signaling associated with relevant parameters of the network device energy-saving technology;
the first obtaining unit is further used to obtain information of a first network device energy-saving technology or relevant parameters of the first network device energy-saving technology indicated by the network device through dynamic signaling, where the first network energy-saving technology is one or more of the network device energy-saving technologies;
determine the first occasion configuration parameter and/or the first monitoring position of the energy-saving signaling according to the configuration information, the information of the first network device energy-saving technology or the relevant parameters of the first network device energy-saving technology.

The first obtaining unit is further used to:
obtain at least one value in a first parameter set explicitly indicated by the network device through dynamic signaling; or
obtain at least one value in the first parameter set implicitly indicated by the network device through dynamic signaling.

The first obtaining unit is further used to:
obtain the at least one value directly indicated by the network device through dynamic signaling; or
determine at least one value activated or deactivated by the network device through dynamic signaling.

The device further includes:
a second receiving unit used to receive configuration information sent by the network device, where the configuration information is used to indicate at least one value in the first parameter set associated with the network device energy-saving technology, or is used to indicate at least one value in the first parameter set associated with relevant parameters of the network device energy-saving technology.

Optionally, the first obtaining unit is further used to:
obtain information of a second network device energy-saving technology or relevant parameters of the second network device energy-saving technology indicated by the network device through dynamic signaling, where the second network energy-saving technology is one or more of the network device energy-saving technologies;
determinr the first occasion configuration parameter and/or the first monitoring position of the energy-saving signaling according to the configuration information, the information of the second network device energy-saving technology or the relevant parameters of the second network device energy-saving technology.

The first obtaining unit is further used to:
determine a first occasion configuration parameter and/or a first monitoring position of an energy-saving signaling at a moment (n+k) activated or deactivated by dynamic signaling of the network device at a moment n; or
determinr a first occasion configuration parameter and/or a first monitoring position of an energy-saving signaling within a time window from a moment n to a moment (n+k), activated or deactivated by dynamic signaling of the network device at a moment n;
where n and k are integers greater than or equal to 0.

The first obtaining unit is further used to:
obtain an instruction of skipping configuring or monitoring M first occasion configuration parameters and/or first monitoring positions, indicated by the network device through dynamic signaling; or
obtain an instruction of configuring or monitoring L first occasion configuration parameters and/or first monitoring positions, indicated by the network device through dynamic signaling;
where M and L are integers greater than or equal to 0.

The device further includes:
a second obtaining unit used to obtain configuration information sent by the network device, where the configuration information includes at least one set of fourth timing parameter configuration or fourth monitoring position of the energy-saving signaling.

Optionally, the second obtaining unit is used to obtain the configuration information sent by the network device in one or more of the following manners:
dynamic signaling;
radio resource control RRC signaling;
system message;
broadcast message;
high-level signaling;
core network signaling.

The second obtaining unit is further used to:
obtain first configuration information sent by the network device, where the first configuration information is used to configure at least one set of third timing parameter configuration or third monitoring position of the energy-saving signaling;
obtain second configuration information sent by the network device, where the second configuration information is used to configure the at least one set of third timing parameter configurations or at least one set of first parameter sets corresponding to the third monitoring position;
where the configuration information includes the first configuration information and the second configuration information.

The device further includes:
a fourth obtaining unit used to obtain network parameters sent by the network device, where the network parameters and the configuration information are used to determine a first occasion configuration parameter and/or a first monitoring position of the energy-saving signaling;
a second processing unit used to determine a first occasion configuration parameter and/or a first monitoring position of the energy-saving signaling according to the network parameter and the configuration information.

The device further includes:
a third processing unit used to perform an energy-saving operation according to the energy-saving signaling.

Optionally, the energy-saving signaling includes group-common physical layer downlink signaling.

It is to be noted that the foregoing device provided in the embodiments of the present disclosure can perform all the method steps performed in the foregoing method embodiments, and can achieve the same technical effect. The parts and beneficial effects in this embodiment that are the same as those in the method embodiment will not be described in detail here.

As shown in FIG. 15, an information processing device according to an embodiment of the present disclosure is applied to a network device and includes:
a first sending unit 1501 used to indicate a first occasion configuration parameter and/or a first monitoring position of an energy-saving signaling to a user equipment (UE); where the first occasion configuration parameter and/or the first monitoring position is used to determine whether to skip or monitor the energy-saving signaling, and the energy-saving signaling is used to indicate network energy-saving information.

Optionally, the network energy-saving information includes at least one of the following:
time domain energy-saving information;
frequency domain energy-saving information;
spatial domain energy-saving information;
power domain energy-saving information.

The device further includes:
a second sending unit used to indicate the first occasion configuration parameter and/or the first monitoring position of the energy-saving signaling to the UE through dynamic signaling.

The device further includes:
a third sending unit used to indicatr the first occasion configuration parameter and/or the first monitoring position of the energy-saving signaling to the UE in one or more of the following manners:
explicit manner;
explicit manner;
based on predefined rules.

The second sending unit used is further used to execute at one of the following steps:
explicitly indicating the first occasion configuration parameter and/or the first monitoring position of the energy-saving signaling through dynamic signaling;
implicitly indicating the first occasion configuration parameter and/or the first monitoring position of the energy-saving signaling through dynamic signaling;
indicating at least one value in a first parameter set through dynamic signaling, where the first parameter set includes at least one set of second occasion configuration parameters or second monitoring positions of the energy-saving signaling, and the at least one value corresponds to at least one set of parameter sets in the first parameter set;
indicating, at a first moment, through dynamic signaling, a first occasion configuration parameter and/or a first monitoring position of the energy-saving signaling at a second moment or within a first time range;
indicating a processing manner for a preset number of first occasion configuration parameters and/or the first monitoring positions of the energy-saving signaling through dynamic signaling.

The second sending unit is further used to execute at least one of the following steps:
directly indicating the first occasion configuration parameter and/or the first monitoring position of the energy-saving signaling through dynamic signaling;
activating or deactivating at least one of a third timing parameter configuration or a third monitoring position of the energy-saving signaling through dynamic signaling, where at least one of the third timing parameter configuration or the third monitoring position includes the first occasion configuration parameter and/or the first monitoring position;
activating or deactivating the first occasion configuration parameter and/or the first monitoring location through dynamic signaling.

The device further includes:
a fourth sending unit used to send configuration information to the UE, where the configuration information is used to indicate an occasion configuration parameter or monitoring location of an energy-saving signaling associated with the network device energy-saving technology, or is used to indicate an occasion configuration parameter or monitoring location of an energy-saving signaling associated with relevant parameters of the network device energy-saving technology.

Optionally, the second sending unit is used to:
according to the configuration information, indicate, through dynamic signaling, information of a first network device energy-saving technology or relevant parameters of the first network device energy-saving technology; where the first network energy-saving technology is one or more of the network device energy-saving technologies.

The second sending unit is used to:
explicitly indicate at least one value in the first parameter set through dynamic signaling; or
implicitly indicate at least one value in the first parameter set through dynamic signaling.

The second sending unit is used to:
directly indicate the at least one value by dynamic signaling; or
activate or deactivate the at least one value by dynamic signaling.

The device further includes:
a fifth sending unit used to send configuration information to the UE, where the configuration information is used to indicate at least one value in the first parameter set associated with the network device energy-saving technology, or used to indicate at least one value in the first parameter set associated with a relevant parameter of the network device energy-saving technology.

Optionally, the second sending unit is used to:
according to the configuration information, indicate, through dynamic signaling, information of the second network device energy-saving technology or relevant parameters of the second network device energy-saving technology, where the second network energy-saving technology is one or more of the network device energy-saving technologies.

The configuration information is sent to the UE in one or more of the following ways:
dynamic signaling;
RRC signaling;
system messages;
broadcast messages;
high-level signaling;
core network signaling.

Optionally, the relevant parameters include at least one of the following:
system load, resource occupancy rate, service UE ratio, activated UE ratio, and a parameter set of the base station energy-saving technology.

The parameter set of the base station energy-saving technology includes at least one of the following:
a type of the base station energy-saving technology, which includes at least one time domain energy-saving technology, at least one frequency domain energy-saving technology, and at least one spatial domain energy-saving technology;
occasion configuration parameter/monitoring location time domain configuration;
occasion configuration parameter/monitoring location frequency domain configuration,
occasion configuration parameter/monitoring location spatial configuration.

Optionally, the second sending unit is used to:
activate or deactivate a first occasion configuration parameter and/or first monitoring position of the energy-saving signaling at a moment (n+k) through dynamic signaling at a moment n; or
activate or deactivate a first occasion configuration parameter and/or first monitoring position of the energy-saving signaling within a time window from a moment n to a moment (n+k) through dynamic signaling at a moment n;
where n and k are integers greater than or equal to 0.

Optionally, the second sending unit is used to:
instructe, through dynamic signaling, to skip configuring or monitoring M first occasion configuration parameters and/or first monitoring positions; or,
instructe, through dynamic signaling, to configure or monitor L first occasion configuration parameters and/or first monitoring positions;
where M and L are integers greater than or equal to 0.

The device further includes:
a sixth sending unit used to send the configuration information to the UE, where the configuration information includes at least one set of fourth timing parameter configuration or fourth monitoring position of the energy-saving signaling.

Optionally, the sixth sending unit used to send the configuration information to the UE in one or more of the following ways:
dynamic signaling;
RRC signaling;
system message;
broadcast message;
high-layer signaling;
core network signaling.

Optionally, the sixth sending unit is used to:
send first configuration information to the UE, where the first configuration information is used to configure at least one set of third timing parameter configuration or third monitoring position of the energy-saving signaling;
send second configuration information to the UE, where the second configuration information is used to configure at least one set of first parameter sets corresponding to the at least one set of third timing parameter configuration or third monitoring position; where the configuration information includes the first configuration information and the second configuration information.

The sixth sending unit is further used to:
send first configuration information to the UE through RRC signaling or system message or broadcast message or high-level signaling or core network signaling; or
send second configuration information to the UE through RRC signaling or system message or broadcast message or high-level signaling or core network signaling or dynamic signaling.

Optionally, the device further includes:
a seventh sending unit used to send network parameters to the UE, where the network parameters and the configuration information are used to determine the first occasion configuration parameter and/or the first monitoring position of the energy-saving signaling.

Optionally, the first occasion configuration parameter and/or the first monitoring position includes at least one of the following:
an offset of the first occasion configuration parameter and/or the first monitoring position;
a period of the first occasion configuration parameter and/or the first monitoring position;
the number of base station energy-saving timing parameter configurations or monitoring positions within the period of the first occasion configuration parameter and/or the first monitoring position;
an offset of each base station energy-saving timing parameter configuration or monitoring position within the period of the first occasion configuration parameter and/or the first monitoring position;
   and/or,
the network parameters include one or more of the following:
cell identifier, UE identifier, cell group identifier, number of UE groups, UE group identifier, beam identifier, and number of beams.

The device further includes:
a first indication unit used to indicate the energy-saving signaling or indicating transmission of the energy-saving signaling through dynamic signaling.

Optionally, the energy-saving signaling includes at least one of the following:
physical layer dynamic signaling;
dynamic control signaling;
dynamic scheduling signaling;
physical layer downlink control signaling;
MAC CE.

Optionally, the energy-saving signaling includes group-common physical layer downlink signaling.

Optionally, the first occasion configuration parameter and/or the first monitoring position includes one or more of the following levels of signalling:
cell-specific;
group-common;
UE-specific.

Optionally, the first occasion configuration parameter and/or the first monitoring position includes at least one of the following:
time domain location parameter or monitoring location parameter of the energy-saving signaling;
frequency domain location parameter or monitoring location parameter of the energy-saving signaling;
spatial domain location parameter or monitoring location parameter of the energy-saving signaling.

It is to be noted that the foregoing device provided in the embodiments of the present disclosure can perform all the method steps performed in the foregoing method embodiments, and can achieve the same technical effect. The parts and beneficial effects in this embodiment that are the same as those in the method embodiment will not be described in detail here.

It is to be noted that division of units in the embodiment of the present disclosure is exemplary, and is only a logical function division, and there may be another division manner in actual implementation. In addition, each functional unit in each embodiment of the present application may be integrated into one processing unit, each unit may exist separately physically, or two or more units may be integrated into one unit. The foregoing integrated units may be implemented in the form of hardware or in the form of software functional units.

If the integrated units are realized in the form of software function units and sold or used as independent products, they may be stored in a processor-readable storage medium. Based on this understanding, the essence of the technical solution of the present disclosure or the part that contributes to the related art or the part of the technical solution may be embodied in the form of a software product. The computer software product is stored in a storage medium, includes several instructions which enables a computer device (which may be a personal computer, a server, or a network device, etc.) or a processor to execute all or part of the steps of the methods described in various embodiments of the present disclosure. The storage medium includes various media capable of storing program codes such as U disk, mobile hard disk, ROM, RAM, magnetic disk or optical disk.

One embodiment of the present disclosure further provides a communication device, including: a memory, a processor, and a program stored in the memory and executable on the processor. The processor, when executing the program, implements the steps in the above information processing method.

One embodiment of the present disclosure also provides a processor-readable storage medium, including a program stored thereon. When the program is executed by a processor, each process of the above information processing method embodiment is implemented, and the same technical effect can be achieved., which is not repeated here to avoid repetition. The readable storage medium can be any available medium or data storage device that can be accessed by the processor, including but not limited to magnetic storage (such as floppy disk, hard disk, tape, magneto-optical (MO)), optical storage (such as compact disc (CD), high-density digital video disc (DVD), Blu-ray Disc (BD), high-definition universal disc (HVD), etc.), and semiconductor storage (such as ROM, erasable programmable read-only memory (Erasable PROM, EPROM), electrically erasable programmable read-only memory (EEPROM), non-volatile memory (NAND FLASH), solid state drive (SSD)), etc.

It is to be noted that terms such as "including" and "having" and any variations thereof are intended to cover non-exclusive inclusion, so that a process, method, product or device including a series of elements is not limited to the elements that are clearly listed and may include other elements that are not clearly listed or are inherent to the process, method, product, or device. Without further limitation, an element defined by the phrase "including one..." does not exclude the presence of additional identical elements in the process, method, article, or device that includes that element.

Through the description of the above embodiments, those skilled in the art can clearly understand that the method of the above embodiments can be implemented through software plus a necessary general-purpose hardware platform, and of course can also be implemented via hardware. However, in many cases, the former is a better implementation manner. Based on such understanding, the technical solution of the present disclosure, in essence, or the part that contributes to the related technologies may be embodied in the form of a software product. This computer software product is stored in a storage medium (such as ROM/RAM, a disk, an optical disc) and includes a plurality of instructions for causing a terminal device (which may be a mobile phone, a computer, a server, an air conditioner, or a network device, etc.) to execute the methods described in the various embodiments of the present disclosure.

The embodiments of the present disclosure have been described above in conjunction with the accompanying drawings, but the present disclosure is not limited to the above embodiments. The above embodiments are merely illustrative and not restrictive. Under the guidance of the present disclosure, ordinary technicians in this field can also make many forms without departing from the scope of protection of the present disclosure and the claims, all of which are within the protection of the present disclosure.

It is to be noted and understood that the division of the above modules is only a division of logical functions, which may be fully or partially integrated into a physical entity or physically separated in actual implementations. These modules may all be implemented in the form of software called by processing elements; or may all be implemented in the form of hardware; or, some modules may be implemented in the form of software called by processing elements, and some modules may be implemented in the form of hardware. For example, a determining module may be a separate processing element, or may be integrated into a certain chip of the above device, or, may be stored in the memory of the above device in the form of program code, and a certain processing element of the above device may call and execute the functions of the determination module. Other modules have similar implementations. In addition, all or part of these modules may be integrated together, and may be implemented independently. The processing element mentioned herein may be an integrated circuit with signal processing capability. In the implementation process, the various steps of the above method or the above various modules may be implemented by an integrated logic circuit in hardware form in elements of a processor or implemented by instructions in the form of software.

For example, the various modules, units, subunits or submodules may be one or more integrated circuits used to implement the above methods, such as one or more application specific integrated circuits (Application Specific Integrated Circuit, ASIC), or one or more microprocessors (Digital Signal Processor, DSP), or one or more field programmable gate arrays (Field Programmable Gate Array, FPGA), etc. As another example, when a module described above is implemented in the form of scheduling program codes by a processing element, the processing element may be a general purpose processor, such as a central processing unit (Central Processing Unit, CPU) or other processors that may call program codes. As another example, these modules may be integrated together and implemented as a system-on-a-chip (system-on-a-chip, SOC).

Terms such as "first" and "second" in the specification and the claims of the present application are used to distinguish similar objects and are not necessarily used to describe a specific order or sequence. It should be understood that the terms used in this way may be interchanged under appropriate circumstances, so that the embodiments of the present application described herein may be implemented in a sequence other than those illustrated or described herein. In addition, terms such as "including" and "having" and any variations thereof are intended to cover non-exclusive inclusion. For example, a process, method, system, product or device including a series of steps or units is not limited to the steps or units that are clearly listed and may include other steps or units that are not clearly listed or are inherent to the process, method, product, or device. Moreover, the term "and/or" used in the specification and the claims indicates involving at least one of connected objects, for example, A and/or B and/or C means 7 situations, including: A alone, B alone, C alone, both A and B, both B and C, both A and C, and all of A, B and C. Similarly, the use of "at least one of A and B" in this specification and claims should be understood as "A alone, B alone, or both A and B".

## Claims

1. An information processing method, applied to a user equipment (UE), comprising:
obtaining a first occasion configuration parameter and/or a first monitoring position of an energy-saving signaling indicated by a network device;
in response to indication of the network device, monitoring or skipping the energy-saving signaling;
wherein the first occasion configuration parameter and/or the first monitoring position is used to determine whether to skip or monitor the energy-saving signaling, and the energy-saving signaling is used to indicate network energy-saving information.

2. The method according to claim 1, wherein the network energy-saving information includes at least one of the following:
time domain energy-saving information;
frequency domain energy-saving information;
spatial domain energy-saving information;
power domain energy-saving information.

3. The method according to claim 1, wherein the first occasion configuration parameter and/or the first monitoring position of the energy-saving signaling indicated by the network device are obtained in one or more of the following manners:
explicit manner;
explicit manner;
based on predefined rules.

4. The method according to claim 1, wherein the obtaining a first occasion configuration parameter and/or a first monitoring position of an energy-saving signaling from an indication of a network device, includes:
obtaining the first occasion configuration parameter and/or the first monitoring position of the energy-saving signaling indicated by the network device through dynamic signaling.

5. The method according to claim 4, wherein the obtaining the first occasion configuration parameter and/or the first monitoring position of the energy-saving signaling indicated by the network device through dynamic signaling, includes one or more of the following:
obtaining the first occasion configuration parameter and/or the first monitoring position of the energy-saving signaling explicitly indicated by the network device through dynamic signaling;
obtaining the first occasion configuration parameter and/or the first monitoring position of the energy-saving signaling implicitly indicated by the network device through dynamic signaling;
obtaining at least one value in a first parameter set indicated by the network device through dynamic signaling, wherein the first parameter set includes at least one set of second occasion configuration parameters or second monitoring positions of the energy-saving signaling, and the at least one value corresponds to at least one set of parameter sets in the first parameter set;
obtaining a first occasion configuration parameter and/or a first monitoring position of the energy-saving signaling at a second moment or within a first time range indicated by the network device through dynamic signaling at a first moment;
obtaining a processing manner for a preset number of first occasion configuration parameters and/or first monitoring positions of the energy-saving signaling indicated by the network device through dynamic signaling.

6. The method according to claim 5, wherein the obtaining the first occasion configuration parameter and/or the first monitoring position of the energy-saving signaling explicitly indicated by the network device through dynamic signaling, includes:
obtaining the first occasion configuration parameter and/or the first monitoring position of the energy-saving signaling directly indicated by the network device through dynamic signaling;
determining at least one of a third timing parameter configuration or a third monitoring position of the energy-saving signaling activated or deactivated by the network device through dynamic signaling, wherein at least one of the third timing parameter configuration or the third monitoring position includes the first occasion configuration parameter and/or the first monitoring position;
determining the first occasion configuration parameter and/or the first monitoring location activated or deactivated by the network device through dynamic signaling.

7. The method according to claim 5, wherein the method further includes:
receiving configuration information sent by the network device, wherein the configuration information is used to indicate an occasion configuration parameter or monitoring location of an energy-saving signaling associated with a network device energy-saving technology, or is used to indicate an occasion configuration parameter or monitoring location of an energy-saving signaling associated with relevant parameters of the network device energy-saving technology;
wherein the obtaining the first occasion configuration parameter and/or the first monitoring position of the energy-saving signaling implicitly indicated by the network device through dynamic signaling, includes:
obtaining information of a first network device energy-saving technology or relevant parameters of the first network device energy-saving technology indicated by the network device through dynamic signaling, wherein the first network energy-saving technology is one or more of the network device energy-saving technology;
determining the first occasion configuration parameter and/or the first monitoring position of the energy-saving signaling according to the configuration information, the information of the first network device energy-saving technology or the relevant parameters of the first network device energy-saving technology.

8. The method according to claim 5, wherein the obtaining at least one value in a first parameter set indicated by the network device through dynamic signaling, includes:
obtaining at least one value in the first parameter set explicitly indicated by the network device through dynamic signaling; or
obtaining at least one value in the first parameter set implicitly indicated by the network device through dynamic signaling.

9. The method according to claim 8, wherein the obtaining at least one value in the first parameter set explicitly indicated by the network device through dynamic signaling, includes:
obtaining the at least one value directly indicated by the network device through dynamic signaling; or
determining at least one value activated or deactivated by the network device through dynamic signaling.

10. The method according to claim 8, wherein the method further includes:
receiving configuration information sent by the network device, wherein the configuration information is used to indicate at least one value in the first parameter set associated with a network device energy-saving technology, or is used to indicate at least one value in the first parameter set associated with relevant parameters of the network device energy-saving technology;
wherein the obtaining at least one value in the first parameter set implicitly indicated by the network device through dynamic signaling, includes:
obtaining information of a second network device energy-saving technology or a relevant parameter of the second network device energy-saving technology indicated by the network device through dynamic signaling, wherein the second network energy-saving technology is one or more of the network device energy-saving technology;
determining the first occasion configuration parameter and/or the first monitoring position of the energy-saving signaling according to the configuration information, the information of the second network device energy-saving technology or the relevant parameters of the second network device energy-saving technology.

11. The method according to claim 5, wherein the obtaining a first occasion configuration parameter and/or a first monitoring position of the energy-saving signaling at a second moment or within a first time range indicated by the network device through dynamic signaling at a first moment, includes:
determining a first occasion configuration parameter and/or a first monitoring position of an energy-saving signaling at a moment (n+k) activated or deactivated by dynamic signaling of the network device at a moment n; or
determining a first occasion configuration parameter and/or a first monitoring position of an energy-saving signaling within a time window from a moment n to a moment (n+k), activated or deactivated by dynamic signaling of the network device at a moment n;
wherein n and k are integers greater than or equal to 0.

12. The method according to claim 5, wherein the obtaining a processing manner for a preset number of first occasion configuration parameters and/or first monitoring positions of the energy-saving signaling indicated by the network device through dynamic signaling, includes:
obtaining an instruction of skipping configuring or monitoring M first occasion configuration parameters and/or first monitoring positions, indicated by the network device through dynamic signaling; or
obtaining an instruction of configuring or monitoring L first occasion configuration parameters and/or first monitoring positions, indicated by the network device through dynamic signaling;
wherein M and L are integers greater than or equal to 0.

13. The method according to claim 1, wherein the method further includes:
obtaining configuration information sent by the network device, wherein the configuration information includes at least one set of fourth timing parameter configurations or fourth monitoring positions of the energy-saving signaling.

14. The method according to claim 13, wherein the configuration information sent by the network device is obtained in one or more of the following manners:
dynamic signaling;
radio resource control (RRC) signaling;
system message;
broadcast message;
high-level signaling;
core network signaling.

15. The method according to claim 13, wherein the obtaining configuration information sent by the network device, includes:
obtaining first configuration information sent by the network device, wherein the first configuration information is used to configure at least one set of third timing parameter configurations or third monitoring positions of the energy-saving signaling;
obtaining second configuration information sent by the network device, wherein the second configuration information is used to configure at least one set of first parameter sets corresponding to the at least one set of third timing parameter configurations or the third monitoring positions;
wherein the configuration information includes the first configuration information and the second configuration information.

16. The method according to claim 13, wherein the method further includes:
obtaining a network parameter sent by the network device, wherein the network parameter and the configuration information are used to determine a first occasion configuration parameter and/or a first monitoring position of the energy-saving signaling;
determining the first occasion configuration parameter and/or first monitoring position of the energy-saving signaling according to the network parameter and the configuration information.

17. The method according to claim 1, wherein the method further includes:
performing an energy-saving operation according to the energy-saving signaling.

18. The method according to claim 1, wherein the energy-saving signaling includes group-common physical layer downlink signaling.

19. An information processing method applied to a network device, comprising:
indicating a first occasion configuration parameter and/or a first monitoring position of an energy-saving signaling to a user equipment (UE);
wherein the first occasion configuration parameter and/or the first monitoring position is used to determine whether to skip or monitor the energy-saving signaling, and the energy-saving signaling is used to indicate network energy-saving information.

20. The method according to claim 19, wherein the network energy-saving information includes at least one of the following:
time domain energy-saving information;
frequency domain energy-saving information;
spatial domain energy-saving information;
power domain energy-saving information.

21. The method according to claim 19, wherein the indicating a first occasion configuration parameter and/or a first monitoring position of an energy-saving signaling to a user equipment (UE), includes:
indicating the first occasion configuration parameter and/or the first monitoring position of the energy-saving signaling to the UE through dynamic signaling.

22. The method according to claim 19, wherein the first occasion configuration parameter and/or the first monitoring position of the energy-saving signaling is indicated to the UE in one or more of the following manners:
explicit manner;
explicit manner;
based on predefined rules.

23. The method according to claim 21, wherein the indicating the first occasion configuration parameter and/or the first monitoring position of the energy-saving signaling to the UE through dynamic signaling, includes:
explicitly indicating the first occasion configuration parameter and/or the first monitoring position of the energy-saving signaling through dynamic signaling;
implicitly indicating the first occasion configuration parameter and/or the first monitoring position of the energy-saving signaling through dynamic signaling;
indicating at least one value in a first parameter set through dynamic signaling, wherein the first parameter set includes at least one set of second occasion configuration parameters or second monitoring positions of the energy-saving signaling, and the at least one value corresponds to at least one set of parameter sets in the first parameter set;
indicating, at a first moment, through dynamic signaling, a first occasion configuration parameter and/or a first monitoring position of the energy-saving signaling at a second moment or within a first time range;
indicating a processing manner for a preset number of first occasion configuration parameters and/or first monitoring positions of the energy-saving signaling through dynamic signaling.

24. The method according to claim 23, wherein the explicitly indicating the first occasion configuration parameter and/or the first monitoring position of the energy-saving signaling through dynamic signaling, includes:
directly indicating the first occasion configuration parameter and/or the first monitoring position of the energy-saving signaling through dynamic signaling;
activating or deactivating at least one of a third timing parameter configuration or a third monitoring position of the energy-saving signaling through dynamic signaling, wherein the at least one of the third timing parameter configuration or the third monitoring position includes the first occasion configuration parameter and/or the first monitoring position;
activating or deactivating the first occasion configuration parameter and/or the first monitoring location through dynamic signaling.

25. The method according to claim 23, wherein the method further includes:
sending configuration information to the UE, wherein the configuration information is used to indicate an occasion configuration parameter or monitoring location of an energy-saving signaling associated with a network device energy-saving technology, or is used to indicate an occasion configuration parameter or monitoring location of an energy-saving signaling associated with relevant parameters of the network device energy-saving technology;
wherein the implicitly indicating the first occasion configuration parameter and/or the first monitoring position of the energy-saving signaling through dynamic signaling, includes:
according to the configuration information, indicating, through dynamic signaling, information of the first network device energy-saving technology or relevant parameters of the first network device energy-saving technology; wherein the first network energy-saving technology is one or more of network device energy-saving technologies.

26. The method according to claim 23, wherein the indicating at least one value in a first parameter set through dynamic signaling, includes:
explicitly indicating at least one value in the first parameter set through dynamic signaling; or
implicitly indicating at least one value in the first parameter set through dynamic signaling.

27. The method according to claim 23, wherein the explicitly indicating at least one value in the first parameter set through dynamic signaling, includes:
directly indicating the at least one value by dynamic signaling; or
activating or deactivating the at least one value by dynamic signaling.

28. The method according to claim 23, wherein the method further includes:
sending configuration information to the UE, wherein the configuration information is used to indicate at least one value in the first parameter set associated with the network device energy-saving technology, or used to indicate at least one value in the first parameter set associated with a relevant parameter of the network device energy-saving technology;
wherein the implicitly indicating at least one value in the first parameter set through dynamic signaling, includes:
according to the configuration information, indicating, through dynamic signaling, information of a second network device energy-saving technology or relevant parameters of the second network device energy-saving technology, wherein the second network energy-saving technology is one or more of network device energy-saving technologies.

29. The method according to claim 25 or 28, wherein the configuration information is sent to the UE in one or more of the following ways:
dynamic signaling;
RRC signaling;
system messages;
broadcast messages;
high-level signaling;
core network signaling.

30. The method according to claim 25 or 28, wherein the relevant parameter includes at least one of the following:
system load, resource occupancy rate, service UE ratio, activated UE ratio, and a parameter set of the base station energy-saving technology;
wherein the parameter set of the base station energy-saving technology includes at least one of the following:
a type of the base station energy-saving technology, which includes at least one time domain energy-saving technology, at least one frequency domain energy-saving technology, and at least one spatial domain energy-saving technology;
occasion configuration parameter or monitoring location time domain configuration;
occasion configuration parameter or monitoring location frequency domain configuration,
occasion configuration parameter or monitoring location spatial configuration.

31. The method according to claim 23, wherein the indicating, at a first moment, through dynamic signaling, a first occasion configuration parameter and/or a first monitoring position of the energy-saving signaling at a second moment or within a first time range, includes:
activating or deactivating a first occasion configuration parameter and/or first monitoring position of the energy-saving signaling at a moment (n+k) through dynamic signaling at a moment n; or
activating or deactivating a first occasion configuration parameter and/or first monitoring position of the energy-saving signaling within a time window from a moment n to a moment (n+k) through dynamic signaling at a moment n;
wherein n and k are integers greater than or equal to 0.

32. The method according to claim 23, wherein the indicating a processing manner for a preset number of first occasion configuration parameters and/or first monitoring positions of the energy-saving signaling through dynamic signaling, includes:
instructing, through dynamic signaling, to skip configuring or monitoring M first occasion configuration parameters and/or first monitoring positions; or,
instructing, through dynamic signaling, to configure or monitor L first occasion configuration parameters and/or first monitoring positions;
wherein M and L are integers greater than or equal to 0.

33. The method according to claim 19, wherein the method further includes:
sending the configuration information to the UE, wherein the configuration information includes at least one set of fourth timing parameter configurations or fourth monitoring positions of the energy-saving signaling.

34. The method according to claim 33, wherein the configuration information is sent to the UE in one or more of the following ways:
dynamic signaling;
RRC signaling;
system message;
broadcast message;
high-layer signaling;
core network signaling.

35. The method according to claim 33, wherein the sending the configuration information to the UE, includes:
sending first configuration information to the UE, wherein the first configuration information is used to configure at least one set of third timing parameter configurations or third monitoring positions of the energy-saving signaling;
sending second configuration information to the UE, wherein the second configuration information is used to configure at least one set of first parameter sets corresponding to the at least one set of third timing parameter configuration or third monitoring position;
wherein the configuration information includes the first configuration information and the second configuration information.

36. The method according to claim 32, wherein the sending first configuration information to the UE, includes:
sending the first configuration information to the UE through RRC signaling or system message or broadcast message or high-level signaling or core network signaling; or
wherein the sending second configuration information to the UE, includes:
sending second configuration information to the UE through RRC signaling or system message or broadcast message or high-level signaling or core network signaling or dynamic signaling.

37. The method according to claim 33, wherein the method further includes:
sending a network parameter to the UE, wherein the network parameter and the configuration information are used to determine the first occasion configuration parameter and/or the first monitoring position of the energy-saving signaling.

38. The method according to claim 37, wherein the first occasion configuration parameter and/or the first monitoring position includes at least one of the following:
an offset of the first occasion configuration parameter and/or the first monitoring position;
a period of the first occasion configuration parameter and/or the first monitoring position;
the number of base station energy-saving timing parameter configurations or monitoring positions within the period of the first occasion configuration parameter and/or the first monitoring position;
an offset of each base station energy-saving timing parameter configuration or monitoring position within the period of the first occasion configuration parameter and/or the first monitoring position;
and/or,
the network parameter includes one or more of the following:
cell identifier, UE identifier, cell group identifier, number of UE groups, UE group identifier, beam identifier, and number of beams.

39. The method according to claim 37, wherein the method further includes:
indicating the energy-saving signaling or indicating transmission of the energy-saving signaling through dynamic signaling.

40. The method according to claim 19, wherein the energy-saving signaling includes at least one of the following:
physical layer dynamic signaling;
dynamic control signaling;
dynamic scheduling signaling;
physical layer downlink control signaling;
MAC CE.

41. The method according to claim 40, wherein the energy-saving signaling includes group-common physical layer downlink signaling.

42. The method according to claim 19, wherein the first occasion configuration parameter and/or the first monitoring position includes one or more of the following levels of signalling:
cell-specific;
group-common;
UE-specific.

43. The method according to claim 19, wherein the first occasion configuration parameter and/or the first monitoring position includes at least one of the following:
time domain location parameter or monitoring location parameter of the energy-saving signaling;
frequency domain location parameter or monitoring location parameter of the energy-saving signaling;
spatial domain location parameter or monitoring location parameter of the energy-saving signaling.

44. An information processing device applied to a user equipment (UE), comprising:
a first obtaining unit used to obtain a first occasion configuration parameter and/or a first monitoring position of an energy-saving signaling from an indication of a network device;
a first processing unit used to, in response to the indication from the network device, monitor or skip the energy-saving signaling;
wherein the first occasion configuration parameter and/or the first monitoring position is used to determine whether to skip or monitor the energy-saving signaling, and the energy-saving signaling is used to indicate network energy-saving information.

45. The device according to claim 44, wherein the network energy-saving information includes at least one of the following:
time domain energy-saving information;
frequency domain energy-saving information;
spatial domain energy-saving information;
power domain energy-saving information.

46. The device according to claim 44, wherein the first obtaining unit is further used to obtain the first occasion configuration parameter and/or the first monitoring position of the energy-saving signaling indicated by the network device in one or more of the following manners:
explicit manner;
explicit manner;
based on predefined rules.

47. The device according to claim 44, wherein the first obtaining unit is further used to obtain the first occasion configuration parameter and/or the first monitoring position of the energy-saving signaling indicated by the network device through dynamic signaling.

48. The device according to claim 47, wherein the first obtaining unit is further used to perform one or more of the following:
obtaining the first occasion configuration parameter and/or the first monitoring position of the energy-saving signaling explicitly indicated by the network device through dynamic signaling;
obtaining the first occasion configuration parameter and/or the first monitoring position of the energy-saving signaling implicitly indicated by the network device through dynamic signaling;
obtaining at least one value in a first parameter set indicated by the network device through dynamic signaling, wherein the first parameter set includes at least one set of second occasion configuration parameters or second monitoring positions of the energy-saving signaling, and the at least one value corresponds to at least one set of parameter sets in the first parameter set;
obtaining a first occasion configuration parameter and/or a first monitoring position of the energy-saving signaling at a second moment or within a first time range indicated by the network device through dynamic signaling at a first moment;
obtaining a processing manner for a preset number of first occasion configuration parameters and/or first monitoring positions of the energy-saving signaling indicated by the network device through dynamic signaling.

49. The device according to claim 48, wherein the first obtaining unit is further used to perform one or more of the following:
obtaining the first occasion configuration parameter and/or the first monitoring position of the energy-saving signaling directly indicated by the network device through dynamic signaling;
determining at least one of a third timing parameter configuration or a third monitoring position of the energy-saving signaling activated or deactivated by the network device through dynamic signaling, wherein at least one of the third timing parameter configuration or the third monitoring position includes the first occasion configuration parameter and/or the first monitoring position;
determining the first occasion configuration parameter and/or the first monitoring location activated or deactivated by the network device through dynamic signaling.

50. The device according to claim 48, wherein the device further includes:
a first receiving unit used to receive configuration information sent by the network device, wherein the configuration information is used to indicate an occasion configuration parameter or monitoring location of an energy-saving signaling associated with a network device energy-saving technology, or is used to indicate an occasion configuration parameter or monitoring location of an energy-saving signaling associated with relevant parameters of the network device energy-saving technology;
wherein the first obtaining unit is further used to obtain information of a first network device energy-saving technology or relevant parameters of the first network device energy-saving technology indicated by the network device through dynamic signaling, wherein the first network energy-saving technology is one or more of the network device energy-saving technology;
determine the first occasion configuration parameter and/or the first monitoring position of the energy-saving signaling according to the configuration information, the information of the first network device energy-saving technology or the relevant parameters of the first network device energy-saving technology.

51. The device according to claim 48, wherein the first obtaining unit is further used to:
obtain at least one value in the first parameter set explicitly indicated by the network device through dynamic signaling; or
obtain at least one value in the first parameter set implicitly indicated by the network device through dynamic signaling.

52. The device according to claim 51, wherein the first obtaining unit is further used to:
obtain the at least one value directly indicated by the network device through dynamic signaling; or
determine at least one value activated or deactivated by the network device through dynamic signaling.

53. The device according to claim 51, wherein the device further includes:
a second receiving unit used to receive configuration information sent by the network device, wherein the configuration information is used to indicate at least one value in the first parameter set associated with a network device energy-saving technology, or is used to indicate at least one value in the first parameter set associated with relevant parameters of the network device energy-saving technology;
wherein the first obtaining unit is further used to:
obtain information of a second network device energy-saving technology or relevant parameters of the second network device energy-saving technology indicated by the network device through dynamic signaling, wherein the second network energy-saving technology is one or more of the network device energy-saving technology;
determine the first occasion configuration parameter and/or the first monitoring position of the energy-saving signaling according to the configuration information, the information of the second network device energy-saving technology or the relevant parameters of the second network device energy-saving technology.

54. The device according to claim 48, wherein the first obtaining unit is further used to:
determine a first occasion configuration parameter and/or a first monitoring position of an energy-saving signaling at a moment (n+k) activated or deactivated by dynamic signaling of the network device at a moment n; or
determine a first occasion configuration parameter and/or a first monitoring position of an energy-saving signaling within a time window from a moment n to a moment (n+k), activated or deactivated by dynamic signaling of the network device at a moment n;
wherein n and k are integers greater than or equal to 0.

55. The device according to claim 48, wherein the first obtaining unit is further used to:
obtain an instruction of skipping configuring or monitoring M first occasion configuration parameters and/or first monitoring positions, indicated by the network device through dynamic signaling; or
obtain an instruction of configuring or monitoring L first occasion configuration parameters and/or first monitoring positions, indicated by the network device through dynamic signaling;
wherein M and L are integers greater than or equal to 0.

56. The device according to claim 44, wherein the device further includes:
a second obtaining unit used to obtain configuration information sent by the network device, wherein the configuration information includes at least one set of fourth timing parameter configurations or fourth monitoring positions of the energy-saving signaling.

57. The device according to claim 56, wherein the second obtaining unit is used to obtain the configuration information sent by the network device in one or more of the following manners:
dynamic signaling;
radio resource control (RRC) signaling;
system message;
broadcast message;
high-level signaling;
core network signaling.

58. The device according to claim 56, wherein the second obtaining unit is used to:
obtain first configuration information sent by the network device, wherein the first configuration information is used to configure at least one set of third timing parameter configurations or third monitoring positions of the energy-saving signaling;
obtain second configuration information sent by the network device, wherein the second configuration information is used to configure at least one set of first parameter sets corresponding to the at least one set of third timing parameter configurations or the third monitoring positions;
wherein the configuration information includes the first configuration information and the second configuration information.

59. The device according to claim 56, wherein the device further includes:
a fourth obtaining unit used to obtain a network parameter sent by the network device, wherein the network parameter and the configuration information are used to determine a first occasion configuration parameter and/or a first monitoring position of the energy-saving signaling;
a second processing unit used to determine the first occasion configuration parameter and/or first monitoring position of the energy-saving signaling according to the network parameter and the configuration information.

60. The device according to claim 44, wherein the device further includes:
a third processing unit used to perform an energy-saving operation according to the energy-saving signaling.

61. The device according to claim 44, wherein the energy-saving signaling includes group-common physical layer downlink signaling.

62. An information processing device applied to a network device, comprising:
a first sending unit used to indicate a first occasion configuration parameter and/or a first monitoring position of an energy-saving signaling to a user equipment (UE);
wherein the first occasion configuration parameter and/or the first monitoring position is used to determine whether to skip or monitor the energy-saving signaling, and the energy-saving signaling is used to indicate network energy-saving information.

63. The device according to claim 62, wherein the network energy-saving information includes at least one of the following:
time domain energy-saving information;
frequency domain energy-saving information;
spatial domain energy-saving information;
power domain energy-saving information.

64. The device according to claim 62, wherein the device further includes:
a second sending unit used to indicate the first occasion configuration parameter and/or the first monitoring position of the energy-saving signaling to the UE through dynamic signaling.

65. The device according to claim 62, wherein the device further includes:
a third sending unit used to indicate the first occasion configuration parameter and/or the first monitoring position of the energy-saving signaling to the UE in one or more of the following manners:
explicit manner;
explicit manner;
based on predefined rules.

66. The device according to claim 64, wherein the second sending unit is used to perform one of the following:
explicitly indicating the first occasion configuration parameter and/or the first monitoring position of the energy-saving signaling through dynamic signaling;
implicitly indicating the first occasion configuration parameter and/or the first monitoring position of the energy-saving signaling through dynamic signaling;
indicating at least one value in a first parameter set through dynamic signaling, wherein the first parameter set includes at least one set of second occasion configuration parameters or second monitoring positions of the energy-saving signaling, and the at least one value corresponds to at least one set of parameter sets in the first parameter set;
indicating, at a first moment, through dynamic signaling, a first occasion configuration parameter and/or a first monitoring position of the energy-saving signaling at a second moment or within a first time range;
indicating a processing manner for a preset number of first occasion configuration parameters and/or first monitoring positions of the energy-saving signaling through dynamic signaling.

67. The device according to claim 66, wherein the second sending unit is used to perform one of the following:
directly indicating the first occasion configuration parameter and/or the first monitoring position of the energy-saving signaling through dynamic signaling;
activating or deactivating at least one of a third timing parameter configuration or a third monitoring position of the energy-saving signaling through dynamic signaling, wherein the at least one of the third timing parameter configuration or the third monitoring position includes the first occasion configuration parameter and/or the first monitoring position;
activating or deactivating the first occasion configuration parameter and/or the first monitoring location through dynamic signaling.

68. The device according to claim 66, wherein the device further includes:
a fourth sending unit used to send configuration information to the UE, wherein the configuration information is used to indicate an occasion configuration parameter or monitoring location of an energy-saving signaling associated with a network device energy-saving technology, or is used to indicate an occasion configuration parameter or monitoring location of an energy-saving signaling associated with relevant parameters of the network device energy-saving technology;
wherein the second sending unit is used to perform one of the following:
according to the configuration information, indicating, through dynamic signaling, information of the first network device energy-saving technology or relevant parameters of the first network device energy-saving technology; wherein the first network energy-saving technology is one or more of network device energy-saving technologies.

69. The device according to claim 66, wherein the second sending unit is used to:
explicitly indicate at least one value in the first parameter set through dynamic signaling; or
implicitly indicate at least one value in the first parameter set through dynamic signaling.

70. The device according to claim 66, wherein the second sending unit is used to:
directly indicate the at least one value by dynamic signaling; or
activate or deactivate the at least one value by dynamic signaling.

71. The device according to claim 66, wherein the device further includes:
a fifth sending unit used to send configuration information to the UE, wherein the configuration information is used to indicate at least one value in the first parameter set associated with the network device energy-saving technology, or used to indicate at least one value in the first parameter set associated with a relevant parameter of the network device energy-saving technology;
wherein the implicitly indicating at least one value in the first parameter set through dynamic signaling, includes:
according to the configuration information, indicating, through dynamic signaling, information of a second network device energy-saving technology or relevant parameters of the second network device energy-saving technology, wherein the second network energy-saving technology is one or more of network device energy-saving technologies.

72. The device according to claim 68 or 71, wherein the configuration information is sent to the UE in one or more of the following ways:
dynamic signaling;
RRC signaling;
system messages;
broadcast messages;
high-level signaling;
core network signaling.

73. The device according to claim 68 or 71, wherein the relevant parameter includes at least one of the following:
system load, resource occupancy rate, service UE ratio, activated UE ratio, and a parameter set of the base station energy-saving technology;
wherein the parameter set of the base station energy-saving technology includes at least one of the following:
a type of the base station energy-saving technology, which includes at least one time domain energy-saving technology, at least one frequency domain energy-saving technology, and at least one spatial domain energy-saving technology;
occasion configuration parameter or monitoring location time domain configuration;
occasion configuration parameter or monitoring location frequency domain configuration,
occasion configuration parameter or monitoring location spatial configuration.

74. The device according to claim 66, wherein the second sending unit is used to:
activate or deactivate a first occasion configuration parameter and/or first monitoring position of the energy-saving signaling at a moment (n+k) through dynamic signaling at a moment n; or
activate or deactivate a first occasion configuration parameter and/or first monitoring position of the energy-saving signaling within a time window from a moment n to a moment (n+k) through dynamic signaling at a moment n;
wherein n and k are integers greater than or equal to 0.

75. The device according to claim 66, wherein the second sending unit is used to:
instruct, through dynamic signaling, to skip configuring or monitoring M first occasion configuration parameters and/or first monitoring positions; or,
instruct, through dynamic signaling, to configure or monitor L first occasion configuration parameters and/or first monitoring positions;
wherein M and L are integers greater than or equal to 0.

76. The device according to claim 62, wherein the device further includes:
a sixth sending unit used to send the configuration information to the UE, wherein the configuration information includes at least one set of fourth timing parameter configurations or fourth monitoring positions of the energy-saving signaling.

77. The device according to claim 76, wherein the sixth sending unit is further used to send the configuration information to the UE in one or more of the following ways:
dynamic signaling;
RRC signaling;
system message;
broadcast message;
high-layer signaling;
core network signaling.

78. The device according to claim 76, wherein the sixth sending unit is used to:
send first configuration information to the UE, wherein the first configuration information is used to configure at least one set of third timing parameter configurations or third monitoring positions of the energy-saving signaling;
send second configuration information to the UE, wherein the second configuration information is used to configure at least one set of first parameter sets corresponding to the at least one set of third timing parameter configuration or third monitoring position;
wherein the configuration information includes the first configuration information and the second configuration information.

79. The device according to claim 75, wherein the sixth sending unit is used to:
send the first configuration information to the UE through RRC signaling or system message or broadcast message or high-level signaling or core network signaling; or
send second configuration information to the UE through RRC signaling or system message or broadcast message or high-level signaling or core network signaling or dynamic signaling.

80. The device according to claim 76, wherein the device further includes:
a seventh sending unit used to send a network parameter to the UE, wherein the network parameter and the configuration information are used to determine the first occasion configuration parameter and/or the first monitoring position of the energy-saving signaling.

81. The device according to claim 80, wherein the first occasion configuration parameter and/or the first monitoring position includes at least one of the following:
an offset of the first occasion configuration parameter and/or the first monitoring position;
a period of the first occasion configuration parameter and/or the first monitoring position;
the number of base station energy-saving timing parameter configurations or monitoring positions within the period of the first occasion configuration parameter and/or the first monitoring position;
an offset of each base station energy-saving timing parameter configuration or monitoring position within the period of the first occasion configuration parameter and/or the first monitoring position;
and/or,
the network parameter includes one or more of the following:
cell identifier, UE identifier, cell group identifier, number of UE groups, UE group identifier, beam identifier, and number of beams.

82. The device according to claim 80, wherein the device further includes:
a first indication unit used to indicate the energy-saving signaling or indicating transmission of the energy-saving signaling through dynamic signaling.

83. The device according to claim 62, wherein the energy-saving signaling includes at least one of the following:
physical layer dynamic signaling;
dynamic control signaling;
dynamic scheduling signaling;
physical layer downlink control signaling;
MAC CE.

84. The device according to claim 83, wherein the energy-saving signaling includes group-common physical layer downlink signaling.

85. The device according to claim 62, wherein the first occasion configuration parameter and/or the first monitoring position includes one or more of the following levels of signalling:
cell-specific;
group-common;
UE-specific.

86. The device according to claim 62, wherein the first occasion configuration parameter and/or the first monitoring position includes at least one of the following:
time domain location parameter or monitoring location parameter of the energy-saving signaling;
frequency domain location parameter or monitoring location parameter of the energy-saving signaling;
spatial domain location parameter or monitoring location parameter of the energy-saving signaling.

87. An information processing device applied to a user equipment (UE), comprising: a memory, a transceiver, and a processor;
wherein the memory is used to store a computer program; the transceiver is used to send and receive data under the control of the processor; and the processor is used to read the computer program in the memory to perform the following operations:
obtaining a first occasion configuration parameter and/or a first monitoring position of an energy-saving signaling from an indication of a network device;
in response to the indication from the network device, monitoring or skipping the energy-saving signaling;
wherein the first occasion configuration parameter and/or the first monitoring position is used to determine whether to skip or monitor the energy-saving signaling, and the energy-saving signaling is used to indicate network energy-saving information.

88. The device according to claim 87, wherein the network energy-saving information includes at least one of the following:
time domain energy-saving information;
frequency domain energy-saving information;
spatial domain energy-saving information;
power domain energy-saving information.

89. The device according to claim 87, wherein the processor is used to read the computer program in the memory to perform the following operations:
obtaining the first occasion configuration parameter and/or the first monitoring position of the energy-saving signaling indicated by the network device in one or more of the following manners:
explicit manner;
explicit manner;
based on predefined rules.

90. The device according to claim 87, wherein the processor is used to read the computer program in the memory to perform the following operations:
obtaining the first occasion configuration parameter and/or the first monitoring position of the energy-saving signaling indicated by the network device through dynamic signaling.

91. The device according to claim 90, wherein the processor is used to read the computer program in the memory to perform the following operations:
obtaining the first occasion configuration parameter and/or the first monitoring position of the energy-saving signaling explicitly indicated by the network device through dynamic signaling;
obtaining the first occasion configuration parameter and/or the first monitoring position of the energy-saving signaling implicitly indicated by the network device through dynamic signaling;
obtaining at least one value in a first parameter set indicated by the network device through dynamic signaling, wherein the first parameter set includes at least one set of second occasion configuration parameters or second monitoring positions of the energy-saving signaling, and the at least one value corresponds to at least one set of parameter sets in the first parameter set;
obtaining a first occasion configuration parameter and/or a first monitoring position of the energy-saving signaling at a second moment or within a first time range indicated by the network device through dynamic signaling at a first moment;
obtaining a processing manner for a preset number of first occasion configuration parameters and/or first monitoring positions of the energy-saving signaling indicated by the network device through dynamic signaling.

92. The device according to claim 91, wherein the processor is used to read the computer program in the memory to perform one or more of the following:
obtaining the first occasion configuration parameter and/or the first monitoring position of the energy-saving signaling directly indicated by the network device through dynamic signaling;
determining at least one of a third timing parameter configuration or a third monitoring position of the energy-saving signaling activated or deactivated by the network device through dynamic signaling, wherein at least one of the third timing parameter configuration or the third monitoring position includes the first occasion configuration parameter and/or the first monitoring position;
determining the first occasion configuration parameter and/or the first monitoring location activated or deactivated by the network device through dynamic signaling.

93. The device according to claim 91, wherein the processor is used to read the computer program in the memory to perform the following operations:
receiving configuration information sent by the network device, wherein the configuration information is used to indicate an occasion configuration parameter or monitoring location of an energy-saving signaling associated with a network device energy-saving technology, or is used to indicate an occasion configuration parameter or monitoring location of an energy-saving signaling associated with relevant parameters of the network device energy-saving technology;
obtaining information of a first network device energy-saving technology or relevant parameters of the first network device energy-saving technology indicated by the network device through dynamic signaling, wherein the first network energy-saving technology is one or more of the network device energy-saving technology;
determining the first occasion configuration parameter and/or the first monitoring position of the energy-saving signaling according to the configuration information, the information of the first network device energy-saving technology or the relevant parameters of the first network device energy-saving technology.

94. The device according to claim 91, wherein the processor is used to read the computer program in the memory to perform the following operations:
obtaining at least one value in the first parameter set explicitly indicated by the network device through dynamic signaling; or
obtaining at least one value in the first parameter set implicitly indicated by the network device through dynamic signaling.

95. The device according to claim 94, wherein the processor is used to read the computer program in the memory to perform the following operations:
obtaining the at least one value directly indicated by the network device through dynamic signaling; or
determining at least one value activated or deactivated by the network device through dynamic signaling.

96. The device according to claim 94, wherein the processor is used to read the computer program in the memory to perform the following operations:
receiving configuration information sent by the network device, wherein the configuration information is used to indicate at least one value in the first parameter set associated with a network device energy-saving technology, or is used to indicate at least one value in the first parameter set associated with relevant parameters of the network device energy-saving technology;
obtaining information of a second network device energy-saving technology or relevant parameters of the second network device energy-saving technology indicated by the network device through dynamic signaling, wherein the second network energy-saving technology is one or more of the network device energy-saving technology;
determining the first occasion configuration parameter and/or the first monitoring position of the energy-saving signaling according to the configuration information, the information of the second network device energy-saving technology or the relevant parameters of the second network device energy-saving technology.

97. The device according to claim 91, wherein the processor is used to read the computer program in the memory to perform the following operations:
determining a first occasion configuration parameter and/or a first monitoring position of an energy-saving signaling at a moment (n+k) activated or deactivated by dynamic signaling of the network device at a moment n; or
determining a first occasion configuration parameter and/or a first monitoring position of an energy-saving signaling within a time window from a moment n to a moment (n+k), activated or deactivated by dynamic signaling of the network device at a moment n;
wherein n and k are integers greater than or equal to 0.

98. The device according to claim 91, wherein the processor is used to read the computer program in the memory to perform the following operations:
obtaining an instruction of skipping configuring or monitoring M first occasion configuration parameters and/or first monitoring positions, indicated by the network device through dynamic signaling; or
obtaining an instruction of configuring or monitoring L first occasion configuration parameters and/or first monitoring positions, indicated by the network device through dynamic signaling;
wherein M and L are integers greater than or equal to 0.

99. The device according to claim 87, wherein the processor is used to read the computer program in the memory to perform the following operations:
obtaining configuration information sent by the network device, wherein the configuration information includes at least one set of fourth timing parameter configurations or fourth monitoring positions of the energy-saving signaling.

100. The device according to claim 99, wherein the processor is used to read the computer program in the memory to perform the following operations:
obtaining the configuration information sent by the network device in one or more of the following manners:
dynamic signaling;
radio resource control (RRC) signaling;
system message;
broadcast message;
high-level signaling;
core network signaling.

101. The device according to claim 99, wherein the processor is used to read the computer program in the memory to perform the following operations:
obtaining first configuration information sent by the network device, wherein the first configuration information is used to configure at least one set of third timing parameter configurations or third monitoring positions of the energy-saving signaling;
obtaining second configuration information sent by the network device, wherein the second configuration information is used to configure at least one set of first parameter sets corresponding to the at least one set of third timing parameter configurations or the third monitoring positions;
wherein the configuration information includes the first configuration information and the second configuration information.

102. The device according to claim 99, wherein the processor is used to read the computer program in the memory to perform the following operations:
obtaining a network parameter sent by the network device, wherein the network parameter and the configuration information are used to determine a first occasion configuration parameter and/or a first monitoring position of the energy-saving signaling;
determining the first occasion configuration parameter and/or first monitoring position of the energy-saving signaling according to the network parameter and the configuration information.

103. The device according to claim 87, wherein the processor is used to read the computer program in the memory to perform the following operations:
performing an energy-saving operation according to the energy-saving signaling.

104. The device according to claim 87, wherein the energy-saving signaling includes group-common physical layer downlink signaling.

105. An information processing device applied to a network device, comprising: a memory, a transceiver, and a processor;
wherein the memory is used to store a computer program; the transceiver is used to send and receive data under the control of the processor; and the processor is used to read the computer program in the memory to perform the following operations:
indicating a first occasion configuration parameter and/or a first monitoring position of an energy-saving signaling to a user equipment (UE);
wherein the first occasion configuration parameter and/or the first monitoring position is used to determine whether to skip or monitor the energy-saving signaling, and the energy-saving signaling is used to indicate network energy-saving information.

106. The device according to claim 105, wherein the network energy-saving information includes at least one of the following:
time domain energy-saving information;
frequency domain energy-saving information;
spatial domain energy-saving information;
power domain energy-saving information.

107. The device according to claim 105, wherein the processor is used to read the computer program in the memory to perform the following operations:
indicating the first occasion configuration parameter and/or the first monitoring position of the energy-saving signaling to the UE through dynamic signaling.

108. The device according to claim 105, wherein the processor is used to read the computer program in the memory to perform the following operations:
indicating the first occasion configuration parameter and/or the first monitoring position of the energy-saving signaling to the UE in one or more of the following manners:
explicit manner;
explicit manner;
based on predefined rules.

109. The device according to claim 107, wherein the processor is used to read the computer program in the memory to perform one of the following:
explicitly indicating the first occasion configuration parameter and/or the first monitoring position of the energy-saving signaling through dynamic signaling;
implicitly indicating the first occasion configuration parameter and/or the first monitoring position of the energy-saving signaling through dynamic signaling;
indicating at least one value in a first parameter set through dynamic signaling, wherein the first parameter set includes at least one set of second occasion configuration parameters or second monitoring positions of the energy-saving signaling, and the at least one value corresponds to at least one set of parameter sets in the first parameter set;
indicating, at a first moment, through dynamic signaling, a first occasion configuration parameter and/or a first monitoring position of the energy-saving signaling at a second moment or within a first time range;
indicating a processing manner for a preset number of first occasion configuration parameters and/or first monitoring positions of the energy-saving signaling through dynamic signaling.

110. The device according to claim 109, wherein the processor is used to read the computer program in the memory to perform one of the following:
directly indicating the first occasion configuration parameter and/or the first monitoring position of the energy-saving signaling through dynamic signaling;
activating or deactivating at least one of a third timing parameter configuration or a third monitoring position of the energy-saving signaling through dynamic signaling, wherein the at least one of the third timing parameter configuration or the third monitoring position includes the first occasion configuration parameter and/or the first monitoring position;
activating or deactivating the first occasion configuration parameter and/or the first monitoring location through dynamic signaling.

111. The device according to claim 109, wherein the processor is used to read the computer program in the memory to perform the following operations:
sending configuration information to the UE, wherein the configuration information is used to indicate an occasion configuration parameter or monitoring location of an energy-saving signaling associated with a network device energy-saving technology, or is used to indicate an occasion configuration parameter or monitoring location of an energy-saving signaling associated with relevant parameters of the network device energy-saving technology;
according to the configuration information, indicating, through dynamic signaling, information of the first network device energy-saving technology or relevant parameters of the first network device energy-saving technology; wherein the first network energy-saving technology is one or more of network device energy-saving technologies.

112. The device according to claim 109, wherein the processor is used to read the computer program in the memory to perform the following operations:
explicitly indicate at least one value in the first parameter set through dynamic signaling; or
implicitly indicate at least one value in the first parameter set through dynamic signaling.

113. The device according to claim 109, wherein the processor is used to read the computer program in the memory to perform the following operations:
directly indicating the at least one value by dynamic signaling; or
activating or deactivating the at least one value by dynamic signaling.

114. The device according to claim 109, wherein the processor is used to read the computer program in the memory to perform the following operations:
sending configuration information to the UE, wherein the configuration information is used to indicate at least one value in the first parameter set associated with the network device energy-saving technology, or used to indicate at least one value in the first parameter set associated with a relevant parameter of the network device energy-saving technology;
according to the configuration information, indicating, through dynamic signaling, information of a second network device energy-saving technology or relevant parameters of the second network device energy-saving technology, wherein the second network energy-saving technology is one or more of network device energy-saving technologies.

115. The device according to claim 111 or 114, wherein the processor is used to read the computer program in the memory to perform the following operations: sending the configuration information to the UE in one or more of the following ways:
dynamic signaling;
RRC signaling;
system messages;
broadcast messages;
high-level signaling;
core network signaling.

116. The device according to claim 111 or 114, wherein the relevant parameter includes at least one of the following:
system load, resource occupancy rate, service UE ratio, activated UE ratio, and a parameter set of the base station energy-saving technology;
wherein the parameter set of the base station energy-saving technology includes at least one of the following:
a type of the base station energy-saving technology, which includes at least one time domain energy-saving technology, at least one frequency domain energy-saving technology, and at least one spatial domain energy-saving technology;
occasion configuration parameter or monitoring location time domain configuration;
occasion configuration parameter or monitoring location frequency domain configuration,
occasion configuration parameter or monitoring location spatial configuration.

117. The device according to claim 109, wherein the processor is used to read the computer program in the memory to perform the following operations:
activating or deactivating a first occasion configuration parameter and/or first monitoring position of the energy-saving signaling at a moment (n+k) through dynamic signaling at a moment n; or
activating or deactivating a first occasion configuration parameter and/or first monitoring position of the energy-saving signaling within a time window from a moment n to a moment (n+k) through dynamic signaling at a moment n;
wherein n and k are integers greater than or equal to 0.

118. The device according to claim 109, wherein the processor is used to read the computer program in the memory to perform the following operations:
instructing, through dynamic signaling, to skip configuring or monitoring M first occasion configuration parameters and/or first monitoring positions; or,
instructing, through dynamic signaling, to configure or monitor L first occasion configuration parameters and/or first monitoring positions;
wherein M and L are integers greater than or equal to 0.

119. The device according to claim 107, wherein the processor is used to read the computer program in the memory to perform the following operations:
sending the configuration information to the UE, wherein the configuration information includes at least one set of fourth timing parameter configurations or fourth monitoring positions of the energy-saving signaling.

120. The device according to claim 119, wherein the processor is used to read the computer program in the memory to perform the following operations: sending the configuration information to the UE in one or more of the following ways:
dynamic signaling;
RRC signaling;
system message;
broadcast message;
high-layer signaling;
core network signaling.

121. The device according to claim 119, wherein the processor is used to read the computer program in the memory to perform the following operations:
sending first configuration information to the UE, wherein the first configuration information is used to configure at least one set of third timing parameter configurations or third monitoring positions of the energy-saving signaling;
sending second configuration information to the UE, wherein the second configuration information is used to configure at least one set of first parameter sets corresponding to the at least one set of third timing parameter configuration or third monitoring position;
wherein the configuration information includes the first configuration information and the second configuration information.

122. The device according to claim 118, wherein the processor is used to read the computer program in the memory to perform the following operations:
sending the first configuration information to the UE through RRC signaling or system message or broadcast message or high-level signaling or core network signaling; or
sending second configuration information to the UE through RRC signaling or system message or broadcast message or high-level signaling or core network signaling or dynamic signaling.

123. The device according to claim 119, wherein the processor is used to read the computer program in the memory to perform the following operations:
sending a network parameter to the UE, wherein the network parameter and the configuration information are used to determine the first occasion configuration parameter and/or the first monitoring position of the energy-saving signaling.

124. The device according to claim 123, wherein the first occasion configuration parameter and/or the first monitoring position includes at least one of the following:
an offset of the first occasion configuration parameter and/or the first monitoring position;
a period of the first occasion configuration parameter and/or the first monitoring position;
the number of base station energy-saving timing parameter configurations or monitoring positions within the period of the first occasion configuration parameter and/or the first monitoring position;
an offset of each base station energy-saving timing parameter configuration or monitoring position within the period of the first occasion configuration parameter and/or the first monitoring position;
and/or,
the network parameter includes one or more of the following:
cell identifier, UE identifier, cell group identifier, number of UE groups, UE group identifier, beam identifier, and number of beams.

125. The device according to claim 123, wherein the processor is used to read the computer program in the memory to perform the following operations:
indicating the energy-saving signaling or indicating transmission of the energy-saving signaling through dynamic signaling.

126. The device according to claim 105, wherein the energy-saving signaling includes at least one of the following:
physical layer dynamic signaling;
dynamic control signaling;
dynamic scheduling signaling;
physical layer downlink control signaling;
MAC CE.

127. The device according to claim 126, wherein the energy-saving signaling includes group-common physical layer downlink signaling.

128. The device according to claim 105, wherein the first occasion configuration parameter and/or the first monitoring position includes one or more of the following levels of signalling:
cell-specific;
group-common;
UE-specific.

129. The device according to claim 105, wherein the first occasion configuration parameter and/or the first monitoring position includes at least one of the following:
time domain location parameter or monitoring location parameter of the energy-saving signaling;
frequency domain location parameter or monitoring location parameter of the energy-saving signaling;
spatial domain location parameter or monitoring location parameter of the energy-saving signaling.

130. A processor-readable storage medium, comprising a computer program stored thereon; wherein the computer program is used to cause a processor to execute the method according to any one of claims 1 to 43.
